# EUROPEAN PATENT SPECIFICATION

(11) **EP 3 524 459 B1**
(45) Date of publication and mention of the grant of the patent: **12.08.2020**
(21) Application number: 19154382.6
(22) Date of filing: 30.01.2019
(51) Int. Cl.: B60K 13/04, F01N 3/00, F01N 13/00, F01N 13/18

(54) **SADDLE RIDING VEHICLE**
SATTEL-FAHRZEUG
VÉHICULE À SELLE

(30) Priority: 09.02.2018 JP 2018022568
(43) Date of publication of application: 14.08.2019
(73) Proprietor: Honda Motor Co., Ltd., 107-8556 Tokyo (JP)
(72) Inventor: Sano, Takahiro, Saitama, 351-0193 (JP); Tadokoro, Hiroshi, Saitama, 351-0193 (JP)
(74) Representative: Kiwit, Benedikt

(56) References cited:
- EP-A1- 3 165 737
- WO-A1-2011/096291
- WO-A1-2018/025652

## Description

### [Technical Field]

The present invention relates to a saddle riding vehicle.

### [Background Art]

A hitherto known saddle riding vehicle including a unit swing engine in which a cylinder portion extends in a fore-aft direction further includes an exhaust gas sensor disposed in an exhaust pipe and disposed immediately below the cylinder portion (see, for example, JP 2001 - 157 891 A).

### [Prior Art Document]

### [Patent Document]

WO 2018 / 025 652 A1 and EP3165737 A1 both disclose an exhaust structure of a saddle-ridden vehicle with a power unit swingably supported on a vehicle body frame by a link member. The exhaust structure further includes an exhaust pipe with a catalytic converter arranged therein.

### [Summary of the Invention]

### [Problem to be Solved by the Invention]

To dispose both the exhaust gas sensor and a catalyst unit in the exhaust pipe of the unit swing engine in the known saddle riding vehicle, a need exists for efficiently disposing the exhaust gas sensor and the catalyst unit.

The present invention has been made in view of the foregoing situation and it is an object of the present invention to enable an exhaust gas sensor and a catalyst unit to be efficiently disposed in an exhaust pipe in a saddle riding vehicle that includes a unit swing engine in which a cylinder portion extends in a fore-aft direction.

### [Means for Solving the Problem]

An aspect of the present invention provides a saddle riding according to claim 1.

In the aspect of the present invention, preferably, the catalyst unit (121) and the exhaust gas sensor (140, 340, 440) are disposed inside the vehicle body frame (12) in a plan view.

In the aspect of the present invention, preferably, the catalyst unit (121) is disposed so as to have a longitudinal direction oriented in a vehicle width direction, and the catalyst unit (121) is disposed offset on a first side in the vehicle width direction with respect to a central portion (C) in the vehicle width direction of the saddle riding vehicle.

In the aspect of the present invention, preferably, the exhaust gas sensor (140, 440) is disposed in the upstream side exhaust pipe (120) at a position anterior to the catalyst unit (121), and the exhaust gas sensor (140, 440) is disposed in the upstream side exhaust pipe (120) from a front side.

In the aspect of the present invention, preferably, the exhaust gas sensor (140, 240, 340, 440) includes a detector (140a) that detects exhaust gas and a terminal (140b) that protrudes to an outside of the upstream side exhaust pipe (120), and the terminal (140b) is disposed at a position superior to the detector (140a).

In the aspect of the present invention, preferably, the exhaust gas sensor (140, 240, 340, 440) is disposed so as to extend along an exhaust flow.

Further preferably, in a side view, the exhaust gas sensor (140, 340, 440) is covered from an outside in a side cover (34) that covers a vehicle body from a side.

In the aspect of the present invention, preferably, the saddle riding vehicle further includes a fuel tank (38) disposed anterior to the exhaust gas sensor (140, 240, 340,440).

In the aspect of the present invention, preferably, the saddle riding vehicle further includes an under cover (33) that covers the vehicle body from below and the under cover (33) has a cutout portion (33a) that avoids a harness (140c) of the upstream side exhaust gas sensor (140).

In the aspect of the present invention the exhaust gas sensor (140, 340) is preferably disposed in the downward extension portion (125).

In the aspect of the present invention the exhaust gas sensor (240) is preferably disposed in the curved portion (127).

In the aspect of the present invention, preferably, with reference to an imaginary axis (127b) that passes through a center of the curved portion (127), the exhaust gas sensor (240) is disposed on an outer surface side of a curve in the curved portion (127).

### [Effects of the Invention]

In accordance with the aspect of the present invention, the saddle riding vehicle includes: the unit swing engine that includes the crankcase and the cylinder portion having the cylinder axis extending from the crankcase in the vehicle fore-aft direction and that is swingably supported on the vehicle body frame; the exhaust pipe connected with the cylinder portion; the catalyst unit disposed in the exhaust pipe; the exhaust gas sensor disposed in the exhaust pipe; and a muffler that is a downstream end portion of the exhaust pipe. In the saddle riding vehicle, the unit swing engine is supported on the vehicle body frame via the vehicle body-side rocking shaft disposed superior to the unit swing engine. In a side view, at least a part of the catalyst unit is disposed inferior to the cylinder portion and is disposed in the region between the imaginary line that connects between the vehicle body-side rocking shaft and the front end of the crankcase and the imaginary line that connects between the exhaust pipe connection portion of the cylinder portion with which an end of the exhaust pipe is connected and the vehicle body-side rocking shaft. The exhaust pipe includes the upstream side exhaust pipe located upstream of the catalyst unit. The exhaust gas sensor is disposed in the upstream side exhaust pipe at a position inferior to the cylinder portion.

The foregoing configurations enable the catalyst unit to be disposed in the region between the imaginary line that connects between the vehicle body-side rocking shaft and the front end of the crankcase, and the imaginary line that connects between the exhaust pipe connection portion and the vehicle body-side rocking shaft in a space inferior to the cylinder portion. Additionally, the foregoing configurations enable the exhaust gas sensor to be disposed in the upstream side exhaust pipe at the position inferior to the cylinder portion. Thus, the catalyst unit and the exhaust gas sensor can be efficiently disposed in the space inferior to the cylinder portion. Additionally, exhaust gas upstream of the catalyst unit can be detected.

In the aspect of the present invention, the catalyst unit and the exhaust gas sensor may be disposed inside the vehicle body frame in a plan view. This configuration allows the catalyst unit and the exhaust gas sensor to be protected by the vehicle body frame and allows centralization of mass to be promoted in the vehicle width direction.

In the aspect of the present invention, the catalyst unit may be disposed so as to have a longitudinal direction oriented in the vehicle width direction, and the catalyst unit may be disposed offset on a first side in the vehicle width direction with respect to the central portion in the vehicle width direction of the saddle riding vehicle. This configuration allows a space to be readily obtained in the vehicle width direction of the catalyst unit, so that the catalyst unit can be easily disposed.

In the aspect of the present invention, the exhaust gas sensor may be disposed in the upstream side exhaust pipe at a position anterior to the catalyst unit, and the exhaust gas sensor may be disposed in the upstream side exhaust pipe from the front side. Through the foregoing configurations, the exhaust gas sensor is disposed in the portion of the upstream side exhaust pipe anterior to the catalyst unit on the front side. The catalyst unit can thus be prevented from interfering with the exhaust gas sensor. The exhaust gas sensor can thus be provided easily.

In the aspect of the present invention, the exhaust gas sensor may include the detector that detects exhaust gas and the terminal that protrudes to the outside of the upstream side exhaust pipe, and the terminal maybe disposed at a position superior to the detector. The foregoing configurations prevent the exhaust gas sensor from protruding downwardly, so that the exhaust gas sensor can be compactly disposed.

In the aspect of the present invention, the exhaust gas sensor may be disposed so as to extend along the exhaust flow. This configuration enables the exhaust gas sensor to prevent turbulence of the exhaust flow, so that the exhaust gas can be readily detected by the exhaust gas sensor.

In the aspect of the present invention, in a side view, the exhaust gas sensor may be covered from the outside in the side cover that covers the vehicle body from a side. This configuration allows the side cover to be used for protecting the exhaust gas sensor and allows appearance to be improved.

In the aspect of the present invention, the saddle riding vehicle may further include the fuel tank disposed anterior to the exhaust gas sensor. This configuration allows the exhaust gas sensor to be protected by the fuel tank.

In the aspect of the present invention, the saddle riding vehicle may further include the under cover that covers the vehicle body from below and the under cover may have the cutout portion that avoids the harness of the exhaust gas sensor. This configuration allows the vehicle body to be protected by the under cover and the harness of the exhaust gas sensor to be easily disposed through use of the cutout portion for avoiding the under cover.

In the aspect of the present invention, the upstream side exhaust pipe includes: the downward extension portion that extends from the exhaust pipe connection portion downwardly; the lateral extension portion that extends from the lower end of the downward extension portion toward the outside in the vehicle width direction; and the curved portion that is bent from an outer end of the lateral extension portion toward the rear and toward the inside in the vehicle width direction and is connected with the catalyst unit disposed posterior to the downward extension portion. The exhaust gas sensor may be disposed in the downward extension portion.

Through the foregoing configurations, the exhaust gas sensor is disposed in the downward extension portion, so that the exhaust gas near the exhaust pipe connection portion can be detected by the exhaust gas sensor.

In the aspect of the present invention, the upstream side exhaust pipe includes: the downward extension portion that extends from the exhaust pipe connection portion downwardly; the lateral extension portion that extends from the lower end of the downward extension portion toward the outside in the vehicle width direction; and the curved portion that is bent from an outer end of the lateral extension portion toward the inside in the vehicle width direction and is connected with the catalyst unit. The exhaust gas sensor may be disposed in the curved portion.

The foregoing configurations result in the curved portion being disposed on a side closer to the outside in the vehicle width direction than the exhaust pipe connection portion is. Thus, access to the exhaust gas sensor in the curved portion can be readily gained from the outside. The exhaust gas sensor thus offers favorable maintainability.

In the aspect of the present invention, with reference to the imaginary axis that passes through the center of the curved portion, the exhaust gas sensor maybe disposed on an outer surface side of the curve in the curved portion. Through the foregoing configuration, a greater amount of the exhaust gas passes through a side closer to the outer surface of the curve with respect to the imaginary axis that passes through the center of the curved portion. Thus, the exhaust gas sensor disposed on the outer surface side of the curve can favorably detected the exhaust gas.

### [Brief Description of the Drawings]

[Fig. 1]

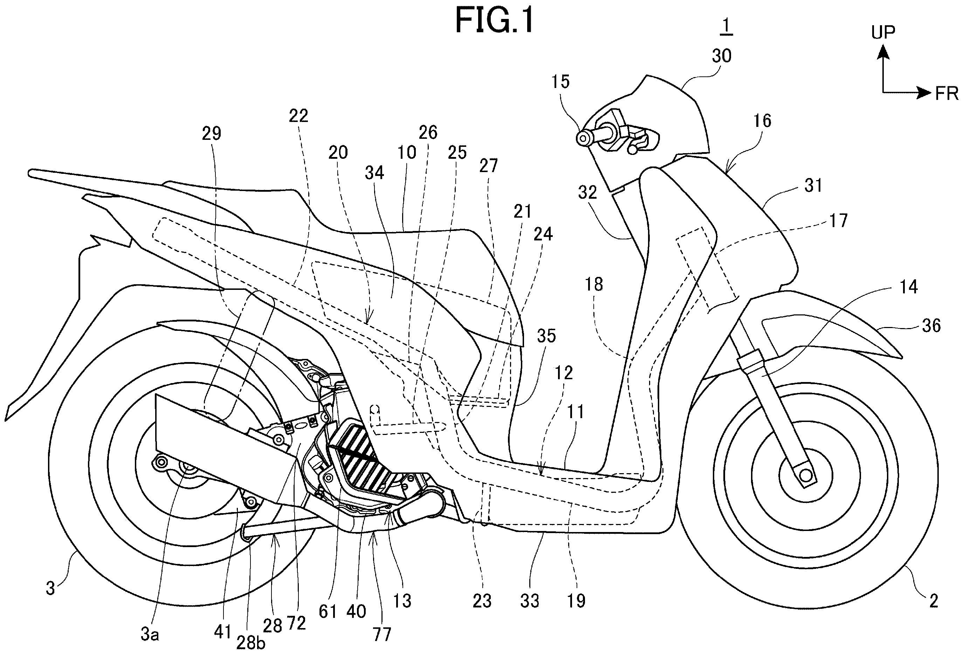

   Fig. 1 is a right side elevation view of a motorcycle according to a first embodiment of the present invention.
[Fig. 2]

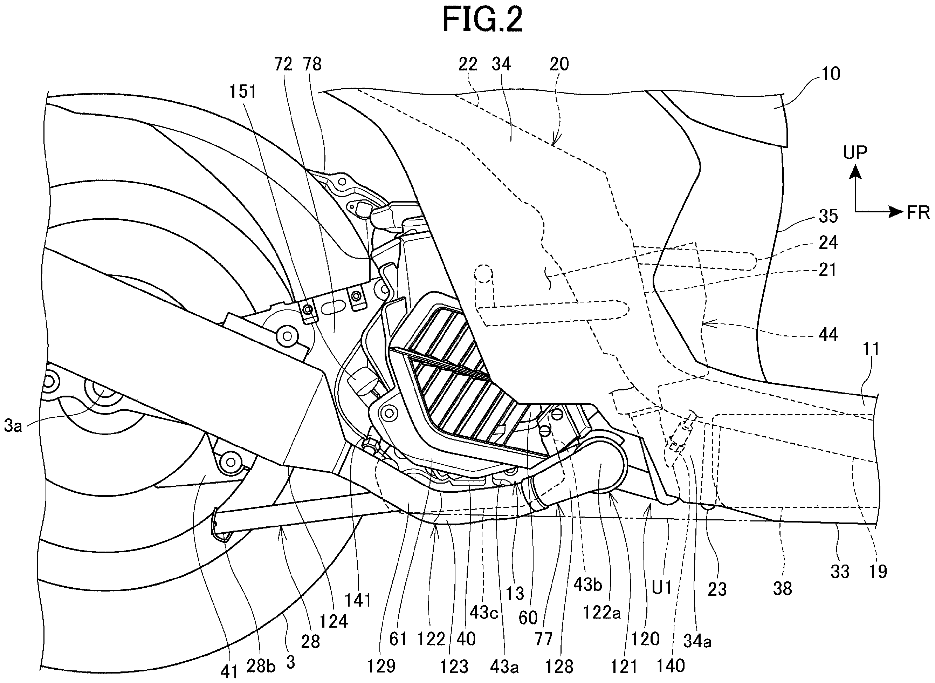

   Fig. 2 is a right side elevation view of a rear portion of the motorcycle.
[Fig. 3]

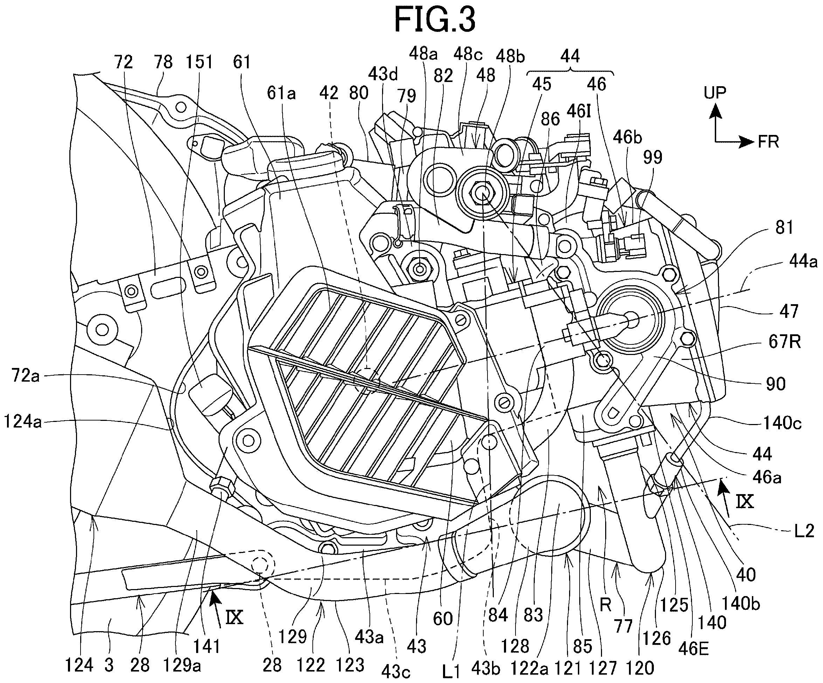

   Fig. 3 is a right side elevation view of a unit swing engine.
[Fig. 4]

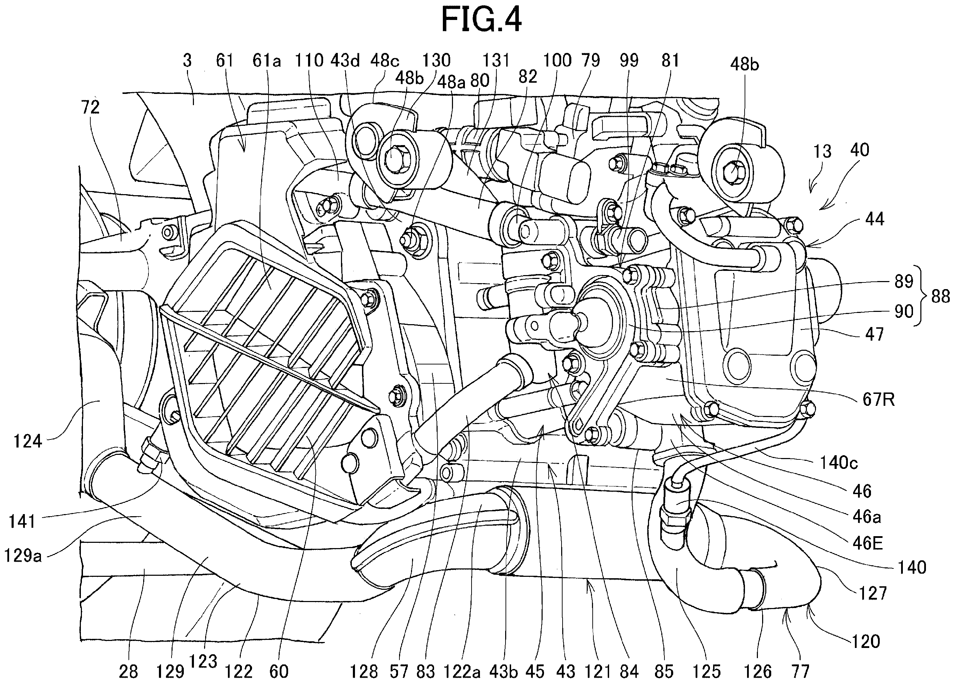

   Fig. 4 is a perspective view of the unit swing engine.
[Fig. 5]

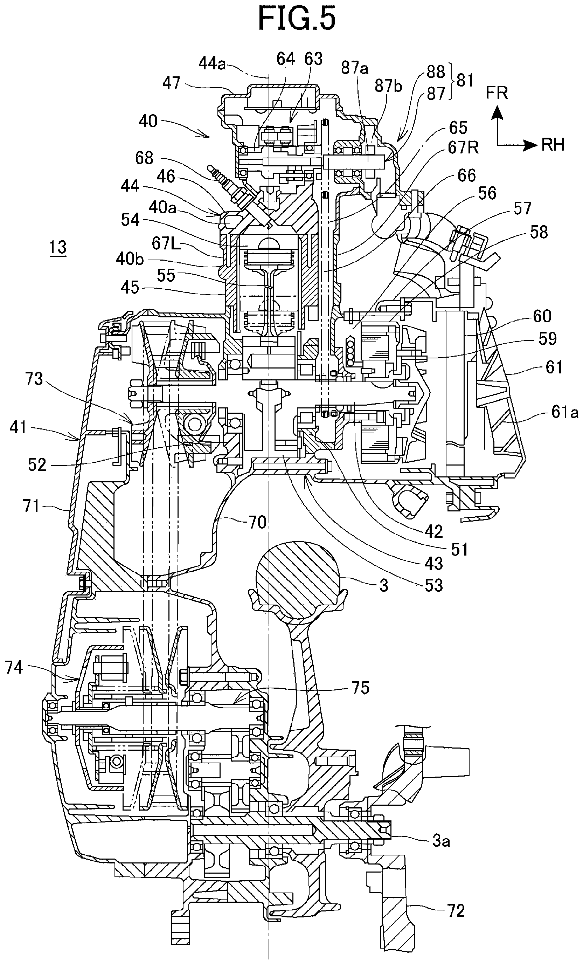

   Fig. 5 is a cross-sectional view of the unit swing engine.
[Fig. 6]

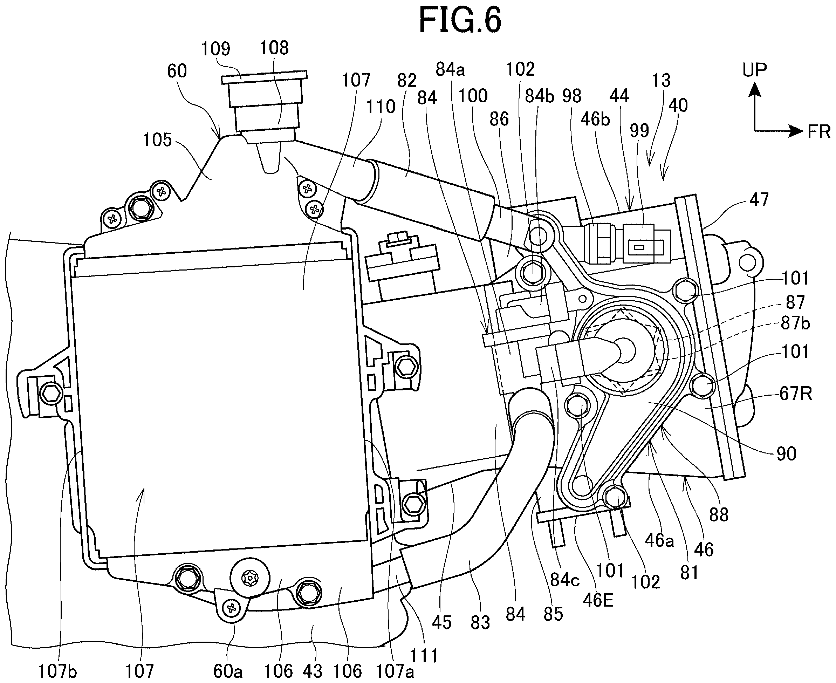

   Fig. 6 is a right side elevation view of a cooling structure of an engine main unit.
[Fig. 7]

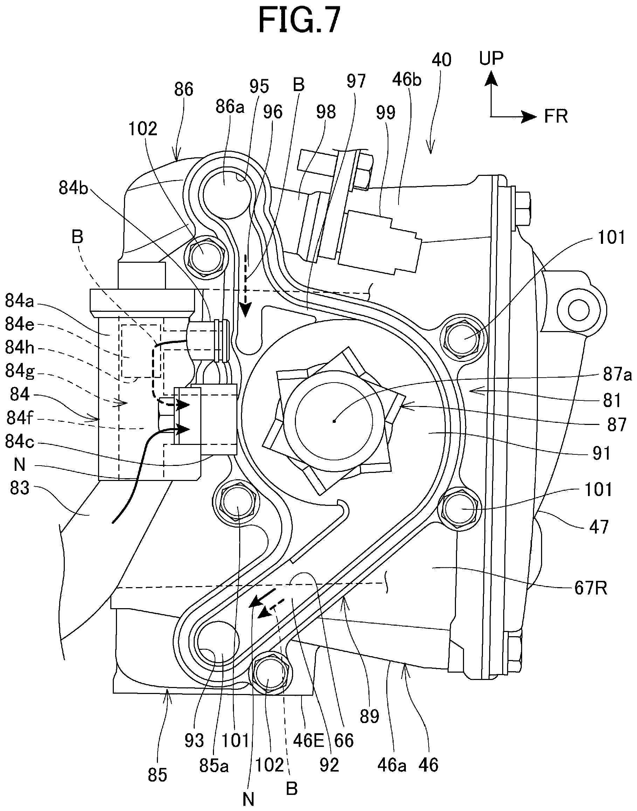

   Fig. 7 is a right side elevation view of a cylinder head.
[Fig. 8]

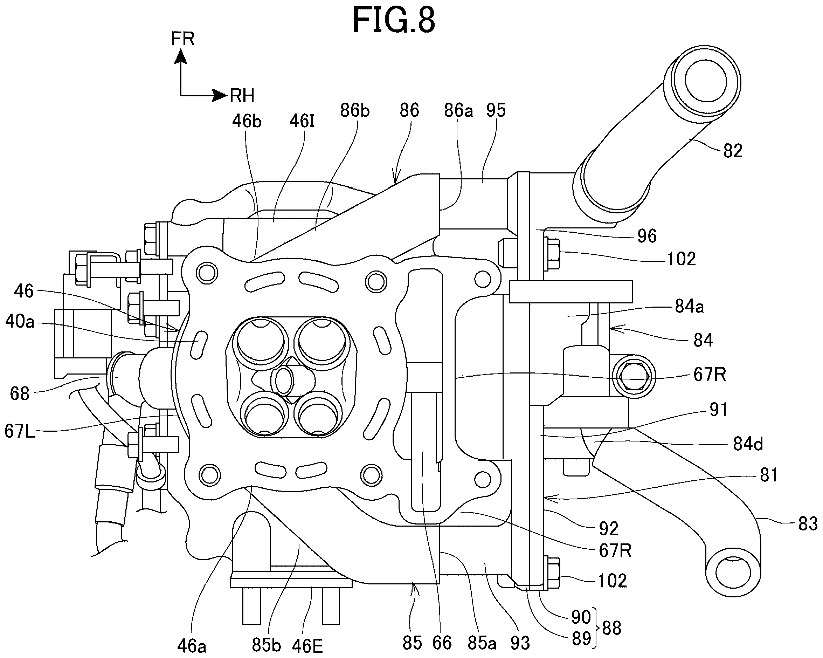

   Fig. 8 is a view of the cylinder head as viewed from a side of a crankcase disposed posterior to the cylinder head.
[Fig. 9]

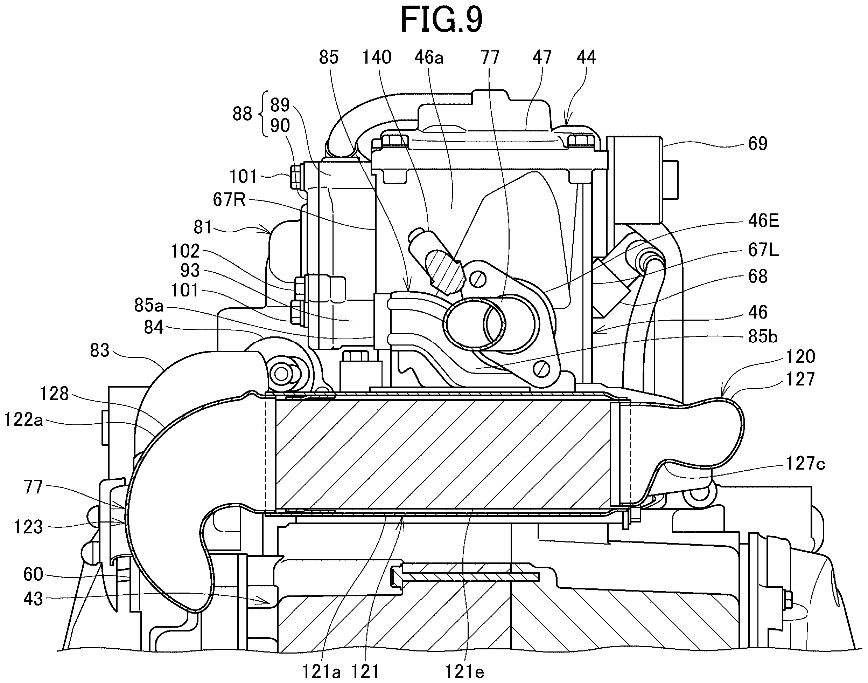

   Fig. 9 is a cross-sectional view taken along line IX-IX in Fig. 3.
[Fig. 10]

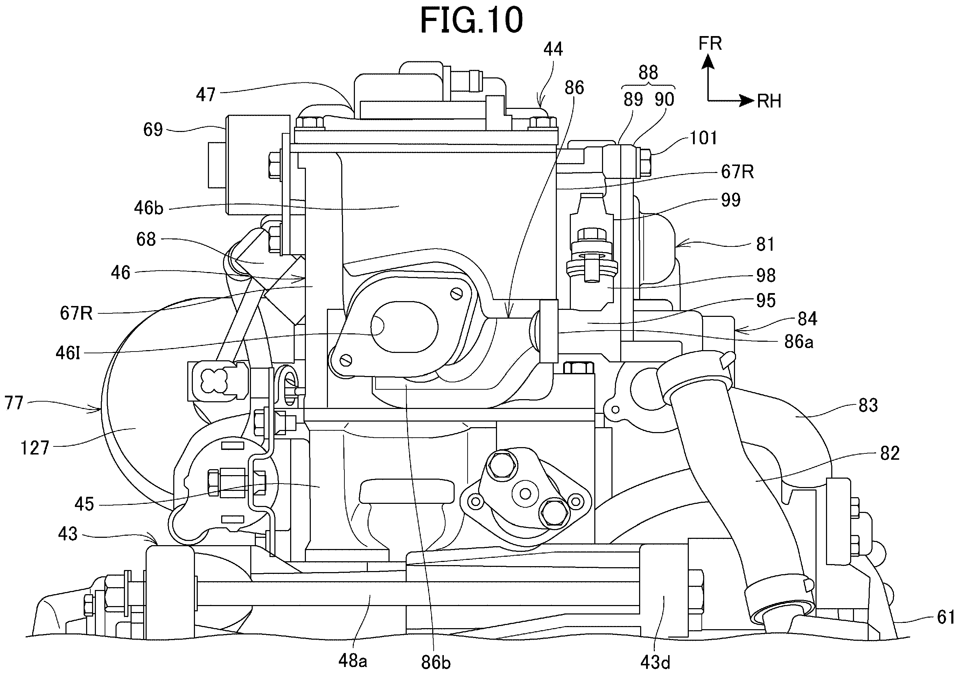

   Fig. 10 is a plan view of the cylinder head as viewed from above.
[Fig. 11]

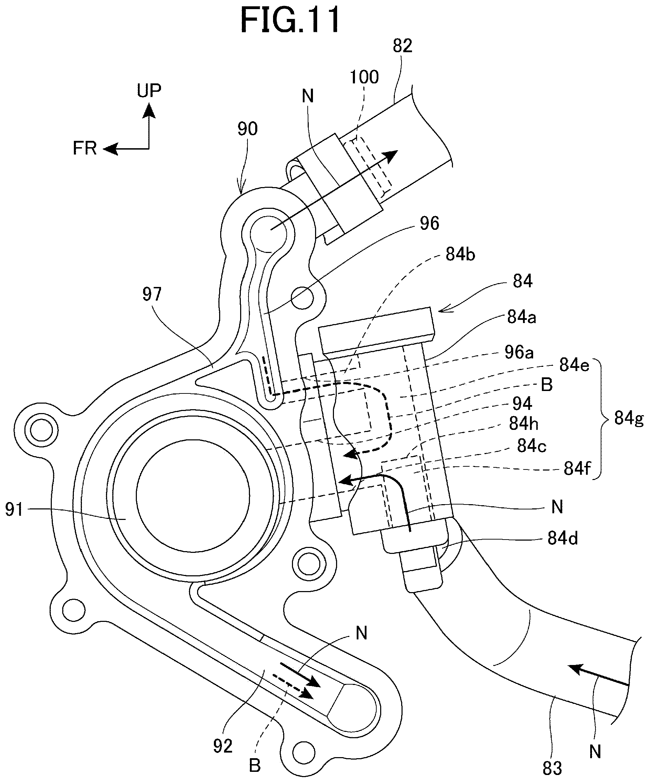

   Fig. 11 is a view of a pump cover as viewed from a side of a pump case.
[Fig. 12]

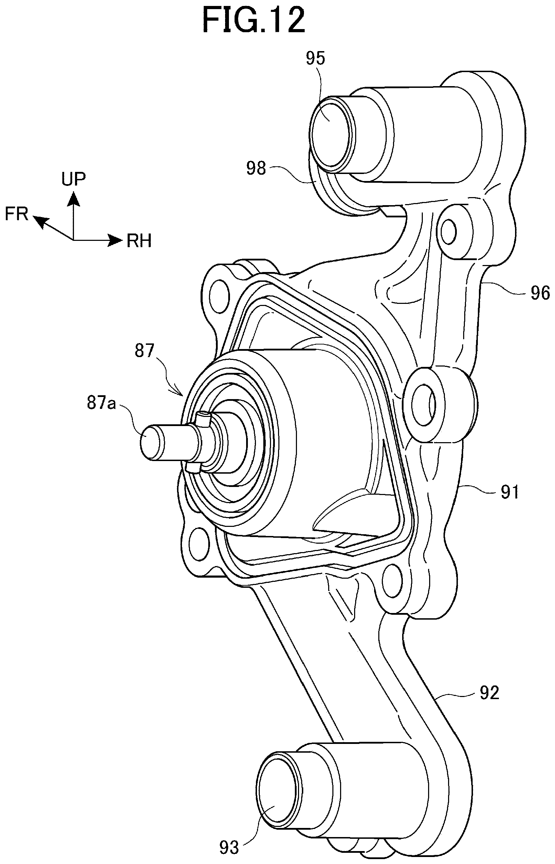

   Fig. 12 is a perspective view of the pump case as viewed from a side of the cylinder head.
[Fig. 13]

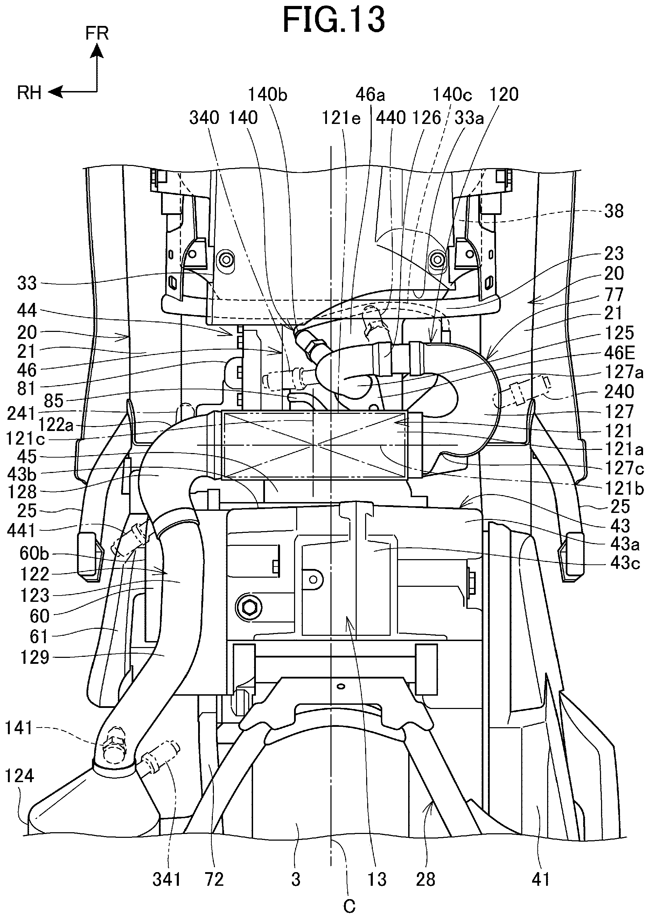

   Fig. 13 is a view of the unit swing engine and parts therearound as viewed from below.
[Fig. 14]

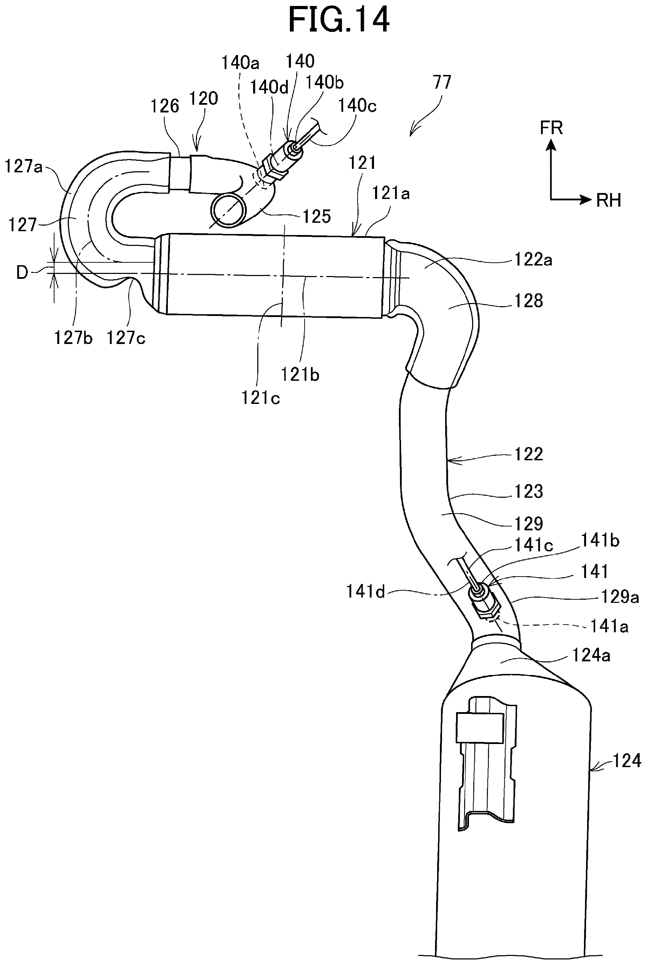

   Fig. 14 is a plan view of an exhaust pipe as viewed from above.
[Fig. 15]

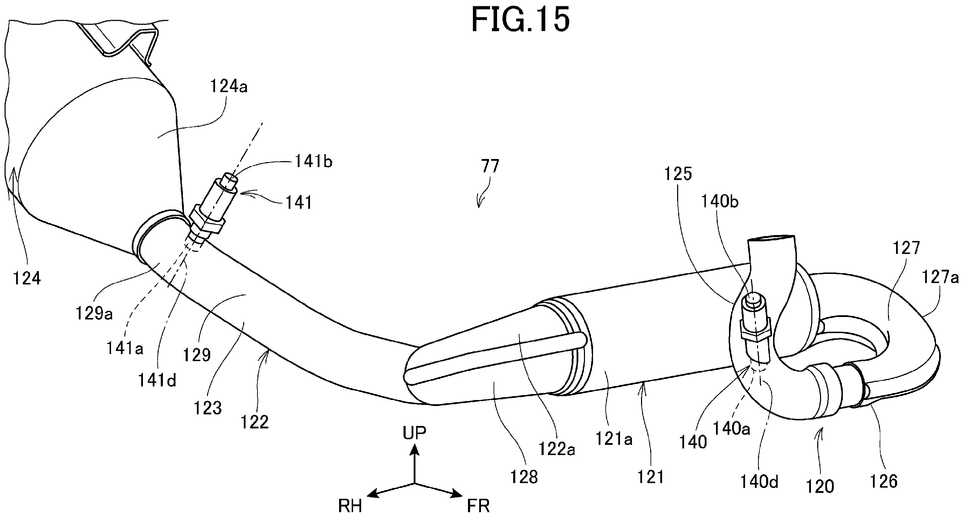

   Fig. 15 is a perspective view of the exhaust pipe as viewed from a right lateral side.
[Fig. 16]

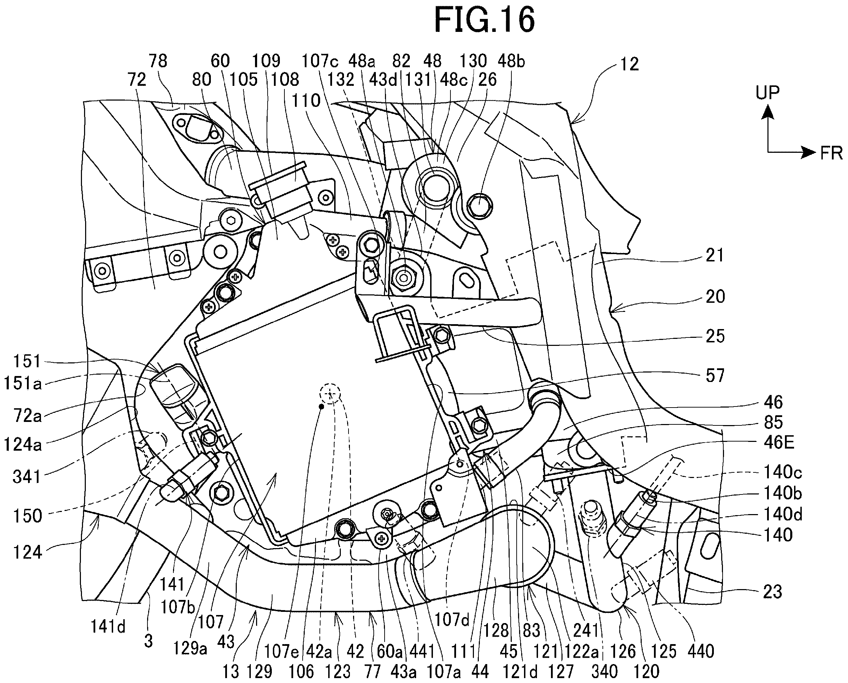

   Fig. 16 is a right side elevation view of parts around a radiator and a linkage mechanism.
[Fig. 17]

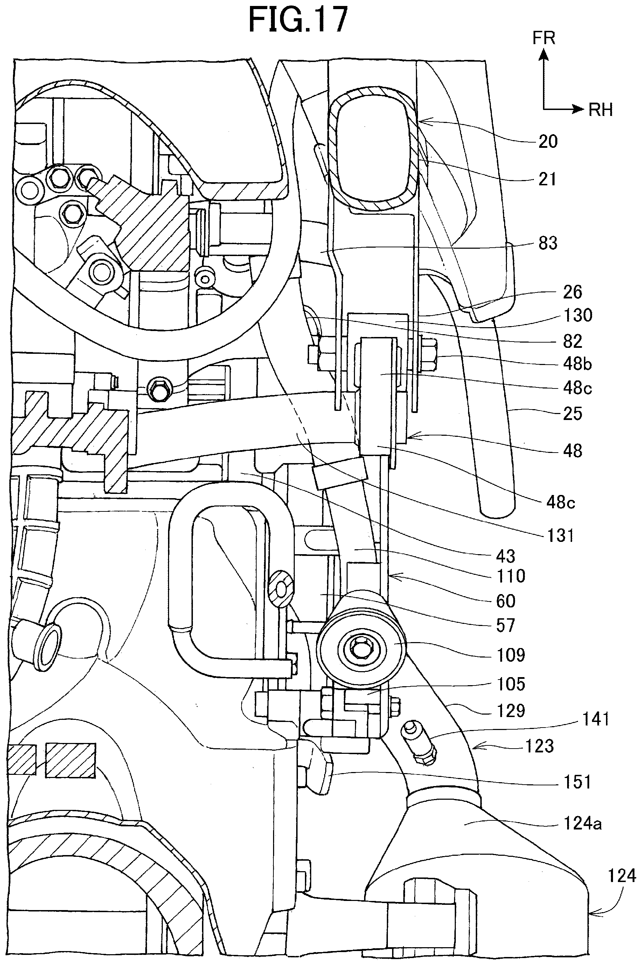

   Fig. 17 is a view of parts around the radiator and the linkage mechanism as viewed from above.
[Fig. 18]

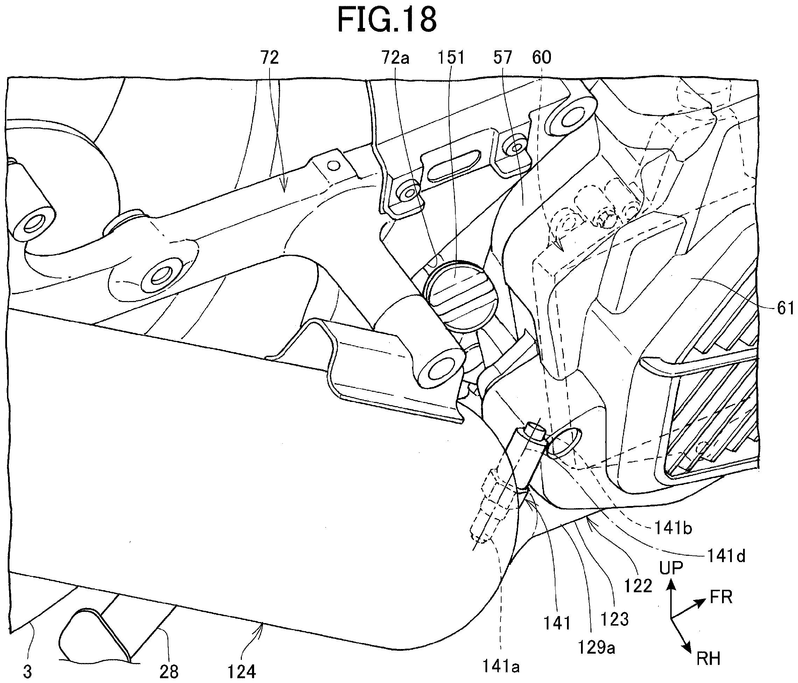

   Fig. 18 is a perspective view of parts around an oil filler port as viewed from above.
[Fig. 19]

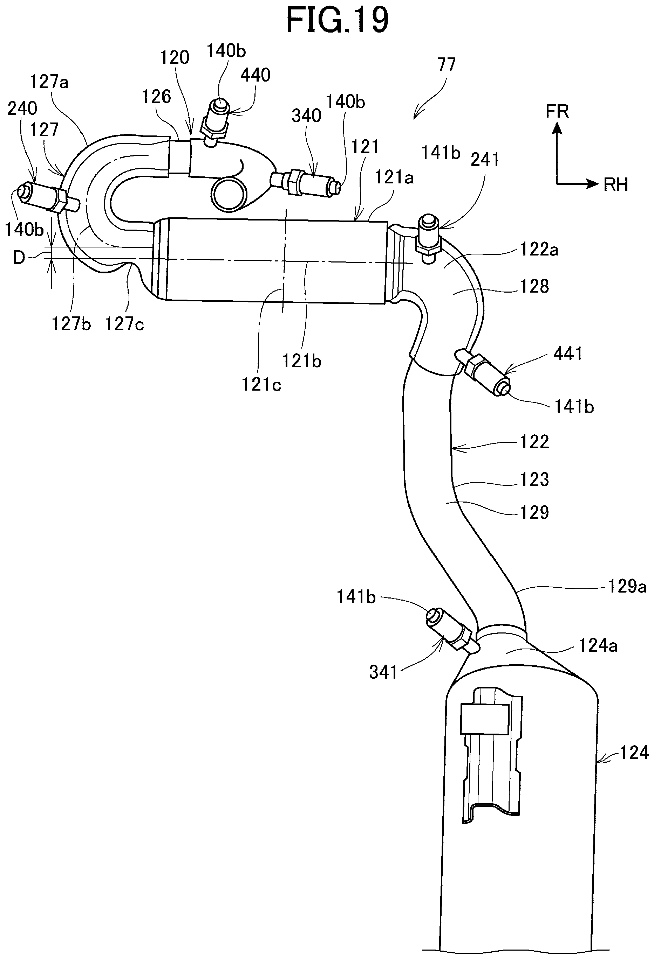

   Fig. 19 is a plan view of an exhaust pipe according to a modification of the first embodiment, as viewed from above.
[Fig. 20]

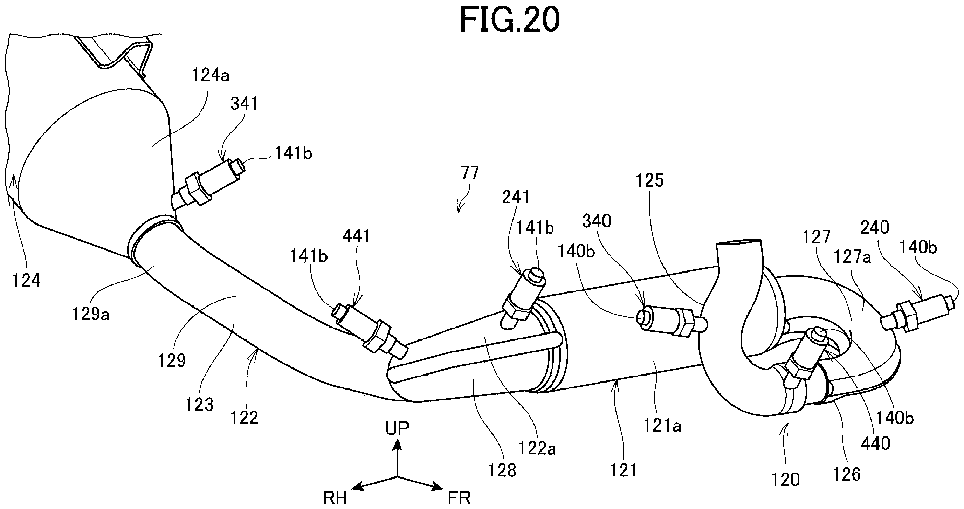

   Fig. 20 is a perspective view of the exhaust pipe in the modification, as viewed from a right lateral side.
[Fig. 21]

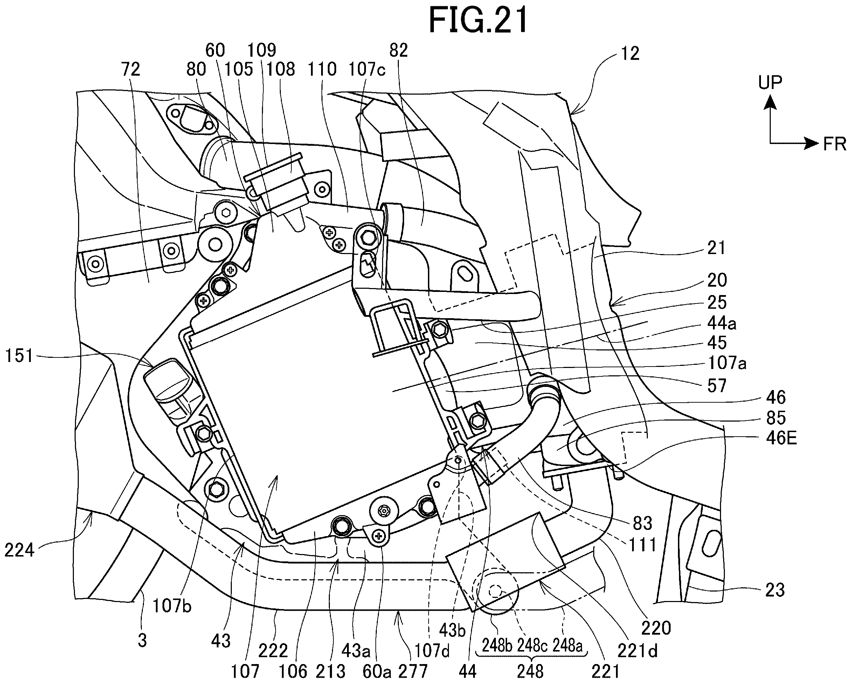

   Fig. 21 is a right side elevation view of parts around a radiator and a linkage mechanism according to a second embodiment.
[Fig. 22]

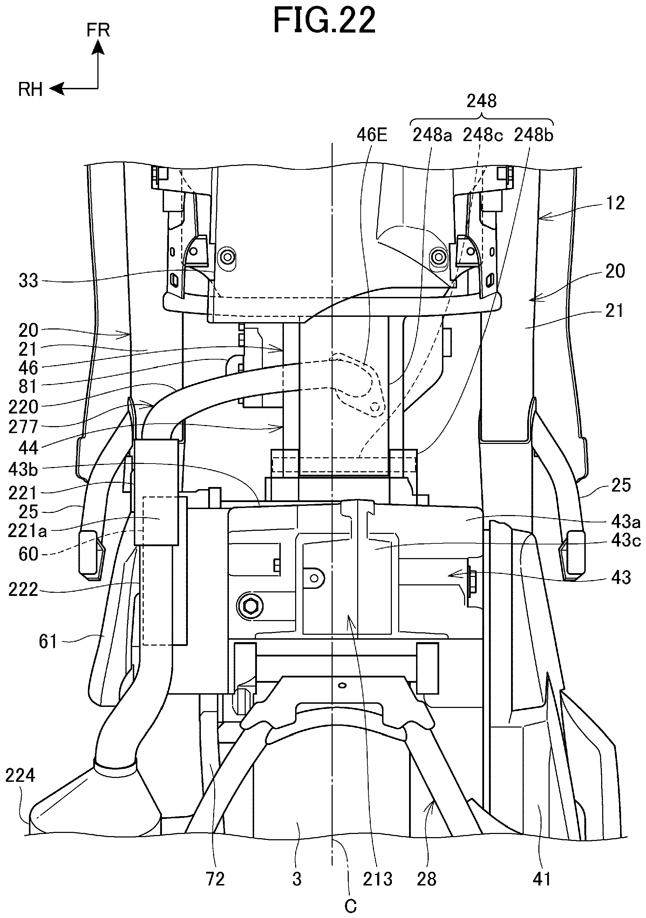

   Fig. 22 is a view of a unit swing engine and parts therearound according to the second embodiment as viewed from below.

### [Mode for Carrying out the Invention]

Specific embodiments to which the present invention is applied will be described below with reference to the accompanying drawings. Throughout the descriptions given hereunder, expressions indicating directions including front and rear, right and left, and upper and lower mean the same directions as those in a vehicle body unless otherwise specified. In the drawings, an arrow FR indicates an anterior direction of the vehicle body, an arrow UP indicates a superior direction of the vehicle body, and an arrow RH indicates a rightward direction of the vehicle body.

### [First Embodiment]

Fig. 1 is a right side elevation view of a motorcycle according to a first embodiment of the present invention. For parts provided in pairs, Fig. 1 depicts the one on the left-hand side only.

This motorcycle 1 is a scooter type saddled vehicle including a low step floor 11 on which an occupant sitting in a seat 10 rests his or her feet. The motorcycle 1 includes a front wheel 2 and a rear wheel 3. The front wheel 2 is disposed anterior to a vehicle body frame 12 (vehicle body). The rear wheel 3 as a drive wheel is journaled on a unit swing engine 13 (internal combustion engine, engine). The unit swing engine 13 is disposed at a rear portion of the vehicle.

The motorcycle 1 includes a front fork 14. The front fork 14 is journaled on a front end portion of the vehicle body frame 12. The front wheel 2 is journaled on a lower end portion of the front fork 14. A handlebar 15, which is steered by the occupant, is mounted at an upper end of the front fork 14.

The motorcycle 1 includes a vehicle body cover 16. The vehicle body cover 16 covers the vehicle body including, for example, the vehicle body frame 12.

The vehicle body frame 12 includes a head pipe 17, a down frame 18, a pair of left and right lower frames 19 and 19, and a pair of left and right seat frames 20 and 20. The head pipe 17 is disposed at a front end. The down frame 18 extends from the head pipe 17 downwardly toward the rear. The lower frames 19 and 19 extend from a lower end of the down frame 18 toward the rear in a substantially horizontal direction. The seat frames 20 and 20 extend from lower ends of the lower frames 19 and 19 upwardly toward the rear.

The lower frames 19 and 19 and the seat frames 20 and 20 are each a pipe shape extending in a fore-aft direction.

The seat frames 20 and 20 each include a riser 21 and a rearward extension 22. The riser 21 extends from a rear end of each of the lower frames 19 and 19 upwardly toward the rear. The rearward extension 22 extends from an upper end of the riser 21 up to a rear end of the vehicle body frame 12. The rearward extension 22 extends upwardly toward the rear at an inclination less sharp than the riser 21.

The vehicle body frame 12 further includes a cross member 23, an upper portion cross member 24, and a pair of left and right support frames 25 and 25. The cross member 23 connects rear end portions of the lower frames 19 and 19 in a vehicle width direction. The upper portion cross member 24 connects upper portions of the risers 21 and 21 in the vehicle width direction. The support frames 25 and 25 extend rearwardly from the respective risers 21 and 21.

Additionally, the vehicle body frame 12 includes a pair of left and right engine brackets 26 and 26. The engine brackets 26 and 26 protrude rearwardly from the respective risers 21 and 21 of the seat frames 20 and 20.

A storage box 27 is disposed at a position between the left and right seat frames 20 and 20 and superior to the unit swing engine 13. An article such as a helmet can be stored in the storage box 27. The seat 10 is supported by an upper surface of the storage box 27 and covers an opening in the upper surface of the storage box 27.

The vehicle body cover 16 includes an upper cover 30, a front cover 31, and a leg shield 32. The upper cover 30 covers an area surrounding the handlebar 15. The front cover 31 covers the head pipe 17 and the down frame 18 from the front and sides. The leg shield 32 joins the front cover 31 from the rear to thereby cover the head pipe 17 and the down frame 18.

The vehicle body cover 16 further includes an under cover 33, the step floor 11, a pair of left and right side covers 34, and a center lower cover 35. The under cover 33 covers the lower frames 19 and 19 from below. The step floor 11 covers the lower frames 19 and 19 from above. The side covers 34 cover the seat frames 20 and 20 and the storage box 27 from sides at positions inferior to the seat 10. The center lower cover 35 covers the storage box 27 and the unit swing engine 13 from the front at a position inferior to the seat 10.

In addition, the motorcycle 1 further includes a front fender 36. The front fender 36 covers the front wheel 2 from above.

Fig. 2 is a right side elevation view of a rear portion of the motorcycle 1. Fig. 3 is a right side elevation view of the unit swing engine 13. Fig. 4 is a perspective view of the unit swing engine 13.

The unit swing engine 13 is a unit swing power unit that integrates an engine main unit 40 with an arm portion 41. The engine main unit 40 is a drive source. The arm portion 41 supports the rear wheel 3.

The rear wheel 3 is journaled on a rear wheel axle 3a at a rear end portion of the arm portion 41.

The engine main unit 40 includes a crankcase 43 and a cylinder portion 44. The crankcase 43 houses a crankshaft 42. The crankshaft 42 extends in the vehicle width direction. The cylinder portion 44 extends from the crankcase 43 toward the front.

The cylinder portion 44 includes a cylinder 45, a cylinder head 46, and a head cover 47, disposed in sequence from the side of the crankcase 43.

The engine main unit 40 is a horizontal engine in which the cylinder portion 44 has a cylinder axis 44a extending in the vehicle fore-aft direction substantially horizontally. More specifically, the cylinder portion 44 extends substantially horizontally, slightly upwardly toward the front in a vehicle side view.

The unit swing engine 13 is swingably supported on the vehicle body frame 12 via a linkage mechanism 48 (connection portion). The linkage mechanism 48 is disposed superior to the unit swing engine 13.

The linkage mechanism 48 includes a rocking shaft 48a, a pair of left and right vehicle body-side rocking shafts 48b and 48b, and a link member 48c. The rocking shaft 48a is connected with an upper portion of the crankcase 43. The vehicle body-side rocking shafts 48b and 48b are connected with the engine brackets 26 and 26 of the seat frames 20 and 20. The link member 48c connects between the rocking shaft 48a and the vehicle body-side rocking shafts 48b and 48b. To state the foregoing differently, the rocking shaft 48a is disposed in the upper portion of the crankcase 43 disposed superior to the cylinder axis 44a of the cylinder portion 44 and the rocking shaft 48a is connected with the vehicle body-side rocking shafts 48b and 48b via the link member 48c, resulting in the unit swing engine 13 being swingably supported on the vehicle body frame 12.

The rocking shaft 48a and the vehicle body-side rocking shaft 48b are each a horizontal shaft extending in the vehicle width direction. The unit swing engine 13 is swingable about the rocking shaft 48a and the vehicle body-side rocking shafts 48b and 48b.

A rear suspension 29 (Fig. 1) is placed across a rear end portion of the unit swing engine 13 and rear portions of the seat frames 20 and 20.

A fuel tank 38 is disposed in a space between the left and right lower frames 19 and 19 and anterior to the cross member 23. The fuel tank 38 is covered in the step floor 11 and the under cover 33 in a vertical direction.

Fig. 5 is a cross-sectional view of the unit swing engine 13.

Reference is made to Figs. 2 to 5. The crankcase 43 has a support wall 51 and a support wall 52. The support wall 51 and the support wall 52 are orthogonal to the crankshaft 42 and the crankshaft 42 is supported by the support wall 51 and the support wall 52 via bearings. A crank chamber 53 is defined between the support wall 51 and the support wall 52.

A piston 54 performs reciprocating motion in the cylinder 45. The piston 54 is connected with the crankshaft 42 in the crank chamber 53 via a connecting rod 55.

The crankcase 43 includes a generator chamber 56 defined therein. The generator chamber 56 is disposed on a first side (right-hand side) in a crosswise direction in the crank chamber 53.

A generator 58 is disposed on a first end of the crankshaft 42, which extends into the generator chamber 56. The generator 58 generates electricity through rotation of the crankshaft 42. The generator 58 rotates integrally with the crankshaft 42. A blower fan 59 is disposed on an outer side surface of the generator 58. The blower fan 59 is covered in a fan cover 57.

A radiator 60 is disposed on an outer lateral side of the blower fan 59. Coolant for the engine main unit 40 passes through the radiator 60. The radiator 60 is fixed on an outer side surface portion of the generator chamber 56. The radiator 60 is covered in a radiator cover 61 from an outside in the vehicle width direction. The radiator cover 61 has a vent port 61a.

A water jacket 40a, through which the coolant passes, is disposed inside a wall of the cylinder head 46. A water jacket 40b, through which the coolant passes, is disposed inside a wall of the cylinder 45. The water jacket 40a communicates with the water jacket 40b.

A valve actuating unit 63 is disposed in the cylinder head 46. The valve actuating unit 63 drives an intake valve and an exhaust valve not depicted. The valve actuating unit 63 includes a camshaft 64, the intake valve, and the exhaust valve. The camshaft 64 is disposed to extend in parallel with the crankshaft 42. The intake valve and the exhaust valve are driven by the camshaft 64. The head cover 47 covers the valve actuating unit 63.

The camshaft 64 is driven by the crankshaft 42 via a cam chain 65. The cam chain 65 connects the camshaft 64 with the crankshaft 42.

The cylinder portion 44 includes a cam chain chamber 66. The cam chain 65 passes through the cam chain chamber 66. The cam chain chamber 66 is disposed across the crankcase 43, the cylinder 45, and the cylinder head 46 and extends in an axial direction of the cylinder portion 44. The cam chain chamber 66 is located between the crank chamber 53 and the generator chamber 56 in the vehicle width direction and disposed on, out of side wall portions 67R and 67L of the cylinder portion 44 in the crosswise direction (vehicle width direction), the side wall portion 67R on a first side (right-hand side). The side wall portions 67L and 67R include side wall portions (side surfaces) of the cylinder head 46.

An ignition plug 68 is disposed in the cylinder head 46 on the side wall portion 67L on a second side (left-hand side).

The crankcase 43 integrally includes a transmission case portion 70. The transmission case portion 70 extends rearwardly from a side surface portion on a side opposite from the generator chamber 56. The transmission case portion 70 extends from a lateral portion of the crank chamber 53 up to a left side of the rear wheel 3.

The transmission case portion 70 is formed into a case shape having an open outer side surface in the vehicle width direction. The open portion is closed by a transmission case cover 71.

The transmission case cover 71 is fixed to the transmission case portion 70, to thereby constitute the arm portion 41 described previously.

A sub-arm 72 is fixed to a rear portion on the first side (right-hand side) in the vehicle width direction in the crankcase 43. The sub-arm 72 extends toward the rear.

The rear wheel axle 3a has both ends supported by a rear end portion of the arm portion 41 and a rear end portion of the sub-arm 72. The rear wheel 3 is disposed between the arm portion 41 and the sub-arm 72.

A belt type continuously variable transmission 73, a centrifugal clutch mechanism 74, and a reduction gear mechanism 75 are disposed inside the hollow arm portion 41. The reduction gear mechanism 75 includes a plurality of gears.

A driving force of the crankshaft 42 is transmitted to the rear wheel 3 via the belt type continuously variable transmission 73, the clutch mechanism 74, and the reduction gear mechanism 75.

Reference is made to Fig. 3. An exhaust pipe 77 of the engine main unit 40 extends from a lower surface 46a of the cylinder head 46. The exhaust pipe 77 further extends toward the rear along the first side (right-hand side) in the vehicle width direction up to a position beside the rear wheel 3.

An intake system of the engine main unit 40 includes an air cleaner box 78, a throttle body 79, and a connecting tube 80. The throttle body 79 is connected with an intake port 46I in an upper surface 46b of the cylinder head 46. The connecting tube 80 connects the air cleaner box 78 with the throttle body 79. The air cleaner box 78 is supported by the arm portion 41.

When the unit swing engine 13 swings via the linkage mechanism 48, the engine main unit 40, the exhaust pipe 77, the intake system, and the radiator 60, for example, swing integrally.

A center stand 28 is mounted on a lower surface portion of a rear portion of the crankcase 43. The center stand 28 allows the motorcycle 1 to be parked in an upright position. The center stand 28 is supported by the crankcase 43 via a center stand rotational shaft 28a. The center stand 28 is rotated about the center stand rotational shaft 28a to thereby be brought into a stowed position or a parked position.

Fig. 6 is a right side elevation view of a cooling structure of the engine main unit 40.

Reference is made to Figs. 3 to 6. The motorcycle 1 includes, as a cooling structure for cooling the engine main unit 40 with coolant, a water pump unit 81, the radiator 60, a feed-side hose 82 (radiator hose), a return-side hose 83, and a thermo-actuator unit 84. The water pump unit 81 feeds coolant. Coolant that flows from the side of the engine main unit 40 to the radiator 60 passes through the feed-side hose 82. Coolant that returns from the radiator 60 to the side of the engine main unit 40 passes through the return-side hose 83. The thermo-actuator unit 84 changes flow paths of coolant.

The water pump unit 81 is disposed on, out of the side wall portions 67R and 67L of the cylinder portion 44 in the crosswise direction (vehicle width direction), the side wall portion 67R on the first side (right-hand side). The radiator 60 is disposed also laterally on the first side (right-hand side) of the crankcase 43 in the crosswise direction (vehicle width direction).

Heat is exchanged between the radiator 60 and air that is drawn in through the vent port 61a in the radiator cover 61 through rotation of the blower fan 59 (Fig. 5). This promotes heat dissipation of the coolant.

The cylinder portion 44 includes a coolant inlet portion 85 and a coolant outlet portion 86. The coolant inlet portion 85 assumes an inlet for the coolant to flow into the cylinder portion 44. The coolant outlet portion 86 assumes an outlet for the coolant to flow out of the cylinder portion 44.

The coolant inlet portion 85 and the coolant outlet portion 86 are disposed in the cylinder head 46.

Fig. 7 is a right side elevation view of the cylinder head 46. Fig. 7 depicts a condition in which a pump cover to be described later is removed. Fig. 8 is a view of the cylinder head 46 as viewed from a side of the crankcase 43, which is disposed posterior to the cylinder head 46. Fig. 9 is a cross-sectional view taken along line IX-IX in Fig. 3.

Reference is made to Figs. 7 to 9. The coolant inlet portion 85 protrudes downwardly from a rear portion of the lower surface 46a of the cylinder head 46. The coolant inlet portion 85 is formed into a tubular shape (path shape) extending from a central portion in the vehicle width direction of the lower surface 46a toward the outside in the vehicle width direction onto the side of the water pump unit 81. The coolant inlet portion 85 has an inlet opening 85a (opening) at an end on the outside in the vehicle width direction. The coolant inlet portion 85 communicates with the water jacket 40a in the cylinder head 46. The lower surface 46a assumes a lower wall surface of the cylinder head 46.

An exhaust pipe connection portion 46E is disposed at a rear portion of the lower surface 46a of the cylinder head 46. The exhaust pipe 77 has an upstream end connected with the exhaust pipe connection portion 46E. The exhaust pipe connection portion 46E protrudes downwardly from the lower surface 46a.

The coolant inlet portion 85 has a proximal end portion 85b formed integrally with an outer peripheral portion of the exhaust pipe connection portion 46E. Specifically, the coolant inlet portion 85 is disposed close to the exhaust pipe connection portion 46E. This configuration allows parts around the exhaust pipe connection portion 46E to be efficiently cooled by the coolant.

The exhaust pipe connection portion 46E and the coolant inlet portion 85 are integrally formed with the cylinder head 46 during casting of the cylinder head 46.

Fig. 10 is a plan view of the cylinder head 46 as viewed from above.

Reference is made to Figs. 7, 8, and 10. The coolant outlet portion 86 protrudes upwardly from a rear portion of the upper surface 46b of the cylinder head 46. The coolant outlet portion 86 is formed into a tubular shape (path shape) extending from a central portion in the vehicle width direction of the upper surface 46b toward the outside in the vehicle width direction onto the side of the water pump unit 81. The coolant outlet portion 86 has an outlet opening 86a at an end on the outside in the vehicle width direction. The coolant outlet portion 86 communicates with the water jacket 40a in the cylinder head 46.

The intake port 46I is disposed at the rear portion of the upper surface 46b of the cylinder head 46. The intake port 46I protrudes upwardly from the upper surface 46b.

The coolant outlet portion 86 has a proximal end portion 86b formed integrally with an outer peripheral portion of the intake port 46I. Specifically, the coolant outlet portion 86 is disposed close to the intake port 46I.

The intake port 46I and the coolant outlet portion 86 are integrally formed with the cylinder head 46 during casting of the cylinder head 46.

As depicted in Figs. 9 and 10, an actuator 69 of a variable valve actuating mechanism of the valve actuating unit 63 is disposed at a portion of the cylinder head 46 on the side wall portion 67L of the cylinder portion 44. In the variable valve actuating mechanism, the actuator 69 can operate to change an operating characteristic of the intake valve and the exhaust valve. The actuator 69 is disposed with the ignition plug 68 on the side wall portion 67L opposite to the side wall portion 67R, on which the water pump unit 81 is disposed.

As depicted in Fig. 7, in a side view facing the side wall portion 67R of the cylinder head 46, the coolant inlet portion 85 protrudes downwardly from the lower surface 46a of the cylinder head 46 and the coolant outlet portion 86 protrudes upwardly from the upper surface 46b of the cylinder head 46.

Reference is made to Figs. 7 and 8. The coolant inlet portion 85 and the coolant outlet portion 86 are spaced apart from each other in the vertical direction with respect to the cam chain chamber 66 at a position at which the coolant inlet portion 85 and the coolant outlet portion 86 are disposed at the same position in the vehicle width direction as the cam chain chamber 66 is disposed. Specifically, in the side view facing the side wall portion 67R of the cylinder head 46, the coolant inlet portion 85 and the coolant outlet portion 86 are spaced apart toward the outside with respect to the cam chain chamber 66 and do not overlap the cam chain chamber 66. The inlet opening 85a and the outlet opening 86a do not overlap the cam chain chamber 66 in the side view. Thus, the coolant inlet portion 85 and the coolant outlet portion 86 can be provided without the layout of the cam chain chamber 66 being affected.

Additionally, as depicted in Fig. 8, the inlet opening 85a and the outlet opening 86a are offset to the inside in the vehicle width direction (toward the side of the cylinder axis 44a) relative to the side wall portion 67R of the cylinder head 46.

As depicted in Fig. 6, the water pump unit 81 includes an impeller 87 and a housing 88. The housing 88 houses the impeller 87 as a rotor.

Reference is made to Figs. 5 and 6. The impeller 87 includes a shaft portion 87a and a vane portion 87b. The shaft portion 87a is connected with an end portion of the camshaft 64. The vane portion 87b is disposed on an outer periphery of the shaft portion 87a. The shaft portion 87a is disposed coaxially, and rotates integrally, with the camshaft 64. The vane portion 87b is disposed outside the side wall portion 67R of the cylinder head 46. Specifically, the impeller 87 is driven by the crankshaft 42 via the camshaft 64.

Reference is made to Figs. 6 and 7. The housing 88 of the water pump unit 81 includes a pump case 89 and a pump cover 90. The pump case 89 supports the impeller 87. The pump cover 90 closes the pump case 89.

Fig. 11 depicts the pump cover 90 as viewed from a side of the pump case 89. Fig. 11 depicts the pump cover 90 on which the thermo-actuator unit 84 is mounted. Fig. 12 is a perspective view of the pump case 89 as viewed from a side of the cylinder head 46.

Reference is made to Figs. 6, 7, and 11. The housing 88 includes a pump housing portion 91, a discharge channel 92, a discharge port 93, a suction port 94, a connection channel 95, a bypass channel 96, and an air vent path 97. The pump housing 91 houses the impeller 87. Coolant discharged through rotation of the impeller 87 passes through the discharge channel 92. The discharge port 93 is disposed at an end of the discharge channel 92. Coolant is drawn in through the suction port 94. The connection channel 95 is connected with the coolant outlet portion 86 of the cylinder head 46. The bypass channel 96 connects the connection channel 95 with the thermo-actuator unit 84. The air vent path 97 provides communication between the pump housing 91 and the bypass channel 96.

In the pump housing 91, the discharge channel 92, the bypass channel 96, and the air vent path 97, coolant or air passes through a passage formed between the pump case 89 and the pump cover 90.

The pump housing 91 is disposed at a central portion in the vertical direction of the side wall portion 67R of the cylinder head 46 and, in the side view of Fig. 7, is situated within a range of the side wall portion 67R. The impeller 87, which is supported by the pump housing 91, is located, in the side view, between the coolant inlet portion 85 and the coolant outlet portion 86 and anterior to the coolant inlet portion 85 and the coolant outlet portion 86.

The discharge channel 92 extends, in a side view, from the pump housing 91 obliquely downwardly toward the rear and, in a side view, has a lower end portion overlapping the inlet opening 85a in the coolant inlet portion 85 from the outside. Specifically, the discharge channel 92 is a protrusion that bulges downwardly relative to the lower surface 46a of the cylinder head 46.

The discharge port 93 is a pipe portion disposed in the pump case 89. The discharge port 93 extends from the lower end portion of the discharge channel 92 inwardly in the vehicle width direction and fits in to be connected with the inlet opening 85a in the coolant inlet portion 85. The discharge port 93 is located inferior to the lower surface 46a of the cylinder head 46.

The bypass channel 96 extends, in a side view, upwardly from a position close to an upper portion of a rear portion of the pump housing 91 and, in a side view, has an upper end portion overlapping the outlet opening 86a in the coolant outlet portion 86 from the outside. Specifically, the bypass channel 96 is a protrusion that bulges upwardly relative to the upper surface 46b of the cylinder head 46. The bypass channel 96 is not directly connected with the pump housing 91.

The connection channel 95 is a pipe portion disposed in the pump case 89. The connection channel 95 extends from an upper end portion of the bypass channel 96 inwardly in the vehicle width direction and fits in to be connected with the outlet opening 86a in the coolant outlet portion 86. The connection channel 95 is located superior to the upper surface 46b of the cylinder head 46.

The pump case 89 has a tubular sensor mounting portion 98. The sensor mounting portion 98 extends toward the front from the connection channel 95. A coolant temperature sensor 99, which measures temperature of the coolant, is inserted in the sensor mounting portion 98 from the front and fixed therein. The coolant temperature sensor 99 is disposed to overlap the cylinder head 46 in a side view.

Reference is made to Fig. 11. The suction port 94 is a tubular portion disposed at a rear portion of the pump cover 90. The suction port 94 opens the rear portion of the pump housing 91 to the rear.

The pump cover 90 includes a bypass tube 96a. The bypass tube 96a opens a lower end portion of the bypass channel 96 to the rear.

The suction port 94 and the bypass tube 96a extend in parallel with each other in the fore-aft direction.

The thermo-actuator unit 84 is mounted on the suction port 94 and the bypass tube 96a from the rear of the pump cover 90. Specifically, the thermo-actuator unit 84 is fixed to the pump cover 90.

The pump cover 90 further includes a hose connection portion 100. The hose connection portion 100 has a pipe shape extending upwardly toward the rear from the upper end portion of the bypass channel 96.

The housing 88 of the water pump unit 81 is fastened to the cylinder head 46 by a plurality of housing fixing bolts 101. The housing fixing bolts 101 are passed through an outer peripheral portion of the pump housing 91 from the outside in the vehicle width direction. The housing fixing bolts 101 fastens the pump cover 90 and the pump case 89 jointly to the cylinder head 46.

The pump cover 90 is fastened to the pump case 89 by a plurality of pump cover fixing bolts 102. The pump cover fixing bolts 102 are passed through an outer peripheral portion of the discharge channel 92 and an outer peripheral portion of the bypass channel 96 from the outside in the vehicle width direction.

Reference is made to Figs. 7 and 11. The thermo-actuator unit 84 includes a tubular portion 84a, a bypass connection pipe 84b, a suction port connection pipe 84c, and a hose connection pipe 84d. The tubular portion 84a extends vertically. The bypass connection pipe 84b and the suction port connection pipe 84c extend toward the front from the tubular portion 84a. The hose connection pipe 84d is disposed at a lower end portion. The return-side hose 83 has a downstream end connected with the hose connection pipe 84d.

The thermo-actuator unit 84 further includes an in-actuator bypass channel 84e (bypass channel) and an in-actuator return channel 84f (normal channel through which coolant passes). The in-actuator bypass channel 84e provides communication between the bypass connection pipe 84b and the suction port connection pipe 84c. The in-actuator return channel 84f provides communication between the hose connection pipe 84d with the suction port connection pipe 84c.

The in-actuator return channel 84f is provided coaxially with, and communicates with, the in-actuator bypass channel 84e.

The tubular portion 84a includes a linear changeover passage 84g. The changeover passage 84g is formed by the in-actuator return channel 84f and the in-actuator bypass channel 84e.

The bypass connection pipe 84b is inserted in the bypass tube 96a and the suction port connection pipe 84c is inserted in the suction port 94, which results in the thermo-actuator unit 84 being connected with the pump cover 90. Specifically, the thermo-actuator unit 84 is connected with the water pump unit 81 via the pump cover 90.

A changeover valve 84h, which is formed by a thermo-actuator (thermostat), is disposed in the changeover passage 84g. The thermo-actuator is an element that expands and contracts through changes in temperature. The thermo-actuator incorporates, for example, wax that expands through changes in temperature.

The changeover valve 84h moves inside the changeover passage 84g according to the temperature of the coolant. More specifically, the changeover valve 84h is brought into either a "normal position" or a "bypass position". At the "normal position," the changeover valve 84h brings the return-side hose 83 into communication with the suction port 94 and interrupts communication between the bypass channel 96 and the suction port 94. At the "bypass position", the changeover valve 84h brings the bypass channel 96 into communication with the suction port 94 and interrupts communication between the return-side hose 83 and the suction port 94.

Reference is made to Fig. 6. The radiator 60 is disposed posterior to the water pump unit 81 and on an outer lateral side of the crankcase 43.

The radiator 60 includes an upper portion tank 105, a lower portion tank 106, and a radiator core 107. The upper portion tank 105 is disposed at an upper end portion of the radiator 60. The lower portion tank 106 is disposed at a lower end portion of the radiator 60. The radiator core 107 vertically connects the upper portion tank 105 with the lower portion tank 106.

Coolant is stored in the upper portion tank 105 and the lower portion tank 106. The radiator core 107 is formed into a plate shape including a plurality of coolant tubes that provide communication between the upper portion tank 105 and the lower portion tank 106 and a plurality of cooling fins disposed around the coolant tubes.

The radiator core 107 has a substantially rectangular shape in a side view. The radiator 60 is disposed such that the radiator core 107 has a wall thickness direction oriented in the vehicle width direction.

The radiator 60 has a filler port 108 at an upper portion at a front portion thereof. The filler port 108 protrudes upwardly from a front portion on an upper surface of the upper portion tank 105. Coolant can be filled in from the filler port 108. The filler port 108 is closed by a radiator cap 109. The upper portion tank 105 has an upper portion connection pipe 110. The upper portion connection pipe 110 extends toward the front from a position of the upper portion tank 105 inferior to a front of the filler port 108.

The feed-side hose 82 (radiator inflow hose) has a downstream end connected with the upper portion connection pipe 110. The feed-side hose 82 has an upstream end connected with the hose connection portion 100 of the pump cover 90. In a side view, the feed-side hose 82 extends from the hose connection portion 100 upwardly toward the rear up to the upper portion connection pipe 110.

The lower portion tank 106 has a lower portion connection pipe 111. The lower portion connection pipe 111 extends obliquely upwardly toward the front from a lower portion on a front surface of the lower portion tank 106. The return-side hose 83 (radiator outflow hose) has an upstream end connected with the lower portion connection pipe 111. The return-side hose 83 has a downstream end connected with the hose connection pipe 84d (Fig. 11) of the thermo-actuator unit 84.

In a side view, the return-side hose 83 extends from the lower portion connection pipe 111 upwardly toward the front up to the hose connection pipe 84d.

Flow of coolant will be described below with reference to Figs. 6, 7, and 11. In Figs. 7 and 11, the flow of coolant for the "normal position" is indicated by a normal path N and the flow of coolant for the "bypass position" is indicated by a bypass path B.

When the changeover valve 84h of the thermo-actuator unit 84 is in the "normal position", the coolant flows through the normal path in which the coolant flows through, in sequence, the water pump unit 81, the cylinder head 46, the coolant outlet portion 86, the radiator 60, and the thermo-actuator unit 84 before returning to the water pump unit 81.

More specifically, for the normal path, the coolant sent under pressure by the impeller 87 flows from the discharge channel 92 to pass through the discharge port 93, flowing from the water pump unit 81 directly into the coolant inlet portion 85 of the cylinder head 46.

The coolant that flows in the coolant inlet portion 85 passes through the water jacket 40a and the water jacket 40b to flow upwardly through the cylinder head 46 and out of the cylinder head 46 by way of the coolant outlet portion 86.

The coolant at the coolant outlet portion 86 flows to the connection channel 95 of the water pump unit 81 and flows in the upper portion tank 105 of the radiator 60 by way of the feed-side hose 82. The coolant then passes through the radiator core 107 to flow in the lower portion tank 106.

The coolant in the lower portion tank 106 flows through the return-side hose 83 to the thermo-actuator unit 84. The coolant then flows through the in-actuator return channel 84f and the suction port connection pipe 84c and returns to the pump housing 91 via the suction port 94.

Through the normal path, the radiator 60 dissipates heat of the coolant, so that the engine main unit 40 can be efficiently cooled.

When the changeover valve 84h of the thermo-actuator unit 84 is in the "bypass position", the coolant flows through the bypass path in which the coolant flows through, in sequence, the water pump unit 81, the cylinder head 46, the coolant outlet portion 86, and the thermo-actuator unit 84 before returning to the water pump unit 81.

More specifically, for the bypass path, the coolant sent under pressure by the impeller 87 flows from the discharge channel 92 to pass through the discharge port 93, flowing from the water pump unit 81 directly into the coolant inlet portion 85 of the cylinder head 46.

The coolant that flows in the coolant inlet portion 85 passes through the water jacket 40a and the water jacket 40b to flow upwardly through the cylinder head 46 and out of the cylinder head 46 by way of the coolant outlet portion 86.

The coolant at the coolant outlet portion 86 flows from the connection channel 95 of the water pump unit 81 to the bypass channel 96 and flows past the bypass connection pipe 84b, the in-actuator bypass channel 84e, and the suction port connection pipe 84c, before returning to the pump housing 91 via the suction port 94.

In the bypass path, the coolant from the coolant outlet portion 86 bypasses the radiator 60 to return to the water pump unit 81. The changeover valve 84h is placed in the "bypass position" when the temperature of the coolant is lower than a predetermined temperature and the engine main unit 40 requires warm-up operation.

As such, when the warm-up operation is required, the coolant bypasses the radiator 60, so that the coolant temperature can be quickly increased and the warm-up operation can be performed efficiently.

Air that accumulates in the pump housing 91 flows from the upper portion of the pump housing 91 through the air vent path 97 up along the bypass channel 96. The air then flows past the feed-side hose 82 onto the upper portion tank 105 of the radiator 60. The air can thus be efficiently discharged through the filler port 108 of the radiator 60.

Fig. 13 is a view of the unit swing engine 13 and parts therearound as viewed from below.

Reference is made to Figs. 2, 3, and 13. The cylinder portion 44 extends from the front surface of the crankcase 43 toward the front and is located between the risers 21 and 21 of the left and right seat frames 20 and 20.

An oil pan portion 43a is disposed at a lower portion of the crankcase 43. The oil pan portion 43a stores oil for the engine main unit 40. The oil pan portion 43a bulges downwardly relative to the cylinder portion 44 and the exhaust pipe connection portion 46E.

The crankcase 43 has a front end 43b and a lower surface 43c. The front end 43b assumes a front end of the oil pan portion 43a. The lower surface 43c assumes a lower surface of the oil pan portion 43a and is disposed inferior to a lower end of the radiator 60.

As depicted in Fig. 13, the exhaust pipe connection portion 46E of the cylinder head 46 is located within a width of the rear wheel 3 in the vehicle width direction and at a central portion in the vehicle width direction. A centerline C in the vehicle width direction passes through a center of the rear wheel 3.

Reference is made to Figs. 2, 3, and 13. The exhaust pipe 77 includes an upstream side exhaust pipe 120, a catalyst unit 121, and a downstream side exhaust pipe 122. The upstream side exhaust pipe 120 is connected with the exhaust pipe connection portion 46E of the cylinder head 46. The catalyst unit 121 is connected with a downstream end of the upstream side exhaust pipe 120. The downstream side exhaust pipe 122 is connected with a downstream end of the catalyst unit 121.

The catalyst unit 121 is located between the upstream side exhaust pipe 120 and the downstream side exhaust pipe 122 in an exhaust flow direction and is disposed midway in the exhaust pipe 77.

The downstream side exhaust pipe 122 includes an exhaust pipe portion 123 and a muffler portion 124. The exhaust pipe portion 123 extends from the catalyst unit 121 toward the rear. The muffler portion 124 is connected with a downstream end of the exhaust pipe portion 123.

The muffler portion 124 is disposed on the first side (right-hand side) in the vehicle width direction with respect to the rear wheel 3. Specifically, the muffler portion 124 is disposed on the first side in the vehicle width direction with respect to the rear wheel 3, which is located on the centerline C in the vehicle width direction, and the arm portion 41 is disposed on the second side (left-hand side) in the vehicle width direction with respect to the rear wheel 3.

Fig. 14 is a plan view of the exhaust pipe 77 as viewed from above. Fig. 15 is a perspective view of the exhaust pipe 77 as viewed from a right lateral side.

Reference is made to Figs. 13 to 15. The upstream side exhaust pipe 120 includes a downward extension portion 125, a lateral extension portion 126, and a curved portion 127. The downward extension portion 125 extends from the exhaust pipe connection portion 46E downwardly along a path anterior to the catalyst unit 121. The lateral extension portion 126 extends from a lower end of the downward extension portion 125 toward the outside on a side opposite from the muffler portion 124 in the vehicle width direction (the first side in the vehicle width direction). The curved portion 127 is bent into a U-shape from an outer end of the lateral extension portion 126 toward the rear and toward the inside in the vehicle width direction.

The curved portion 127 has an outer surface portion 127a disposed inside the risers 21 and 21 of the seat frames 20 and 20.

The catalyst unit 121 includes an outer tube 121a and a catalyst carrier 121e (see Figs. 9 and 13). The outer tube 121a has a cylindrical shape extending in the vehicle width direction. The catalyst carrier 121e also has a cylindrical shape housed inside the outer tube 121a. The catalyst carrier is a honeycomb-shaped porous structure having a plurality of pores extending in an axial direction. The catalyst carrier supports, for example, platinum, rhodium, or palladium as the catalyst for decomposing exhaust gas components.

The catalyst unit 121 has a diameter greater than diameters of the upstream side exhaust pipe 120 and the exhaust pipe portion 123 of the downstream side exhaust pipe 122. The catalyst unit 121 is disposed so as to have a longitudinal direction oriented in the vehicle width direction.

The catalyst unit 121 and the upstream side exhaust pipe 120 are disposed in a space R. The space R is located anterior to the front end 43b or the crankcase 43 and inferior to the cylinder portion 44. The catalyst unit 121 is disposed substantially horizontally in the space R such that an axis 121b of the catalyst unit 121 is oriented in the vehicle width direction, specifically, the catalyst unit 121 is disposed in a direction in which the axis 121b is orthogonal to the centerline C of the vehicle width direction in a bottom view as viewed from below. Additionally, the axis 121b, which is oriented in the longitudinal direction of the catalyst unit 121, extends in parallel with the crankshaft 42. It is noted that the axis 121b of the catalyst unit 121 is not nonetheless required to extend completely in parallel with the crankshaft 42. The catalyst unit 121 may be disposed slightly slantwise with respect to the crankshaft 42, when the catalyst unit 121 has the longitudinal direction oriented in the vehicle width direction.

The catalyst unit 121 has an upstream end disposed on the outer end in the vehicle width direction connected with a downstream end of the curved portion 127.

More specifically, the catalyst unit 121 is disposed anterior to the front end 43b of the crankcase 43, posterior to the exhaust pipe connection portion 46E of the cylinder head 46, and inferior to the cylinder 45. The catalyst unit 121 is disposed, in a side view, posterior to the upstream side exhaust pipe 120 and anterior to the front end 43b of the crankcase 43.

The catalyst unit 121 is disposed superior to a front end portion of the lower surface 43c of the crankcase 43 and inferior to the cylinder 45. Additionally, the catalyst unit 121 is disposed, in a bottom view, between the risers 21 and 21 of the seat frames 20 and 20. As depicted in Fig. 2, the catalyst unit 121 is disposed superior to a linear imaginary line U1, which connects a lower surface of a rear portion of the under cover 33 with the lower surface 43c of the crankcase 43.

The catalyst unit 121 is disposed offset in the vehicle width direction such that a center 121c (depicted in Fig. 13) of the catalyst unit 121 in the vehicle width direction is disposed on the first side in the vehicle width direction with respect to the centerline C of the motorcycle 1 in the vehicle width direction, specifically, on the side of the muffler portion 124. The center 121c of the catalyst unit 121 in the vehicle width direction represents the center of the catalyst unit 121 in the longitudinal direction.

Reference is made to Fig. 14. The curved portion 127 of the upstream side exhaust pipe 120 has a constricted portion (recessed portion) 127c formed in a rear surface portion on a downstream end thereof. The constricted portion 127c is recessed inwardly the curved portion 127. An imaginary axis 127b, which passes through a center of the curved portion 127, is offset on the outside in a radial direction of the catalyst unit 121 by a distance D relative to the axis 121b, which passes through a center in the radial direction of the catalyst unit 121 (axis of the catalyst unit 121). This configuration allows exhaust gas to hit against the center of the catalyst unit 121 even with the curved portion 127 disposed in upstream of the catalyst unit 121. This improves proper contact of the exhaust gas with the catalyst unit 121, so that the catalyst unit 121 can be prevented from being deteriorated locally.

As depicted in the side view of Fig. 3, the catalyst unit 121 is disposed in a region between an imaginary line L1 and an imaginary line L2. The imaginary line L1 connects between the vehicle body-side rocking shafts 48b and 48b of the linkage mechanism 48 and the front end 43b of the crankcase 43 and the imaginary line L2 connects between the vehicle body-side rocking shafts 48b and 48b and the exhaust pipe connection portion 46E. The imaginary line L2 passes through a front end of the exhaust pipe connection portion 46E.

From a different viewpoint, the catalyst unit 121 is disposed at a position anterior to the front end 43b of the crankcase 43, at which at least a part of the catalyst unit 121 overlaps the cylinder 45 from below in a plan view. The catalyst unit 121 may, as a whole, overlap the cylinder 45 from below in a plan view and may have a front end portion or an outer end portion in the vehicle width direction disposed outside the cylinder 45.

In the first embodiment, the linkage mechanism 48 is disposed superior to the crankcase 43. This configuration allows a space to be allocated between the imaginary line L1 and the imaginary line L2 under the cylinder 45, so that the catalyst unit 121 can be disposed in this space. Thus, the catalyst unit 121 can be compactly disposed without interference with other parts surrounding the catalyst unit 121.

More specifically, the catalyst unit 121, because being disposed between the exhaust pipe connection portion 46E of the cylinder head 46 and the front end 43b of the crankcase 43, can be compactly disposed through use of the space between the upstream side exhaust pipe 120 and the front end 43b, while a space can be allocated for disposing the upstream side exhaust pipe 120, which is extended from the exhaust pipe connection portion 46E.

The upstream side exhaust pipe 120 includes the lateral extension portion 126 and the curved portion 127 and extends in the vehicle width direction toward the side opposite from the muffler portion 124 before being bent and connected with the catalyst unit 121. This configuration allows the upstream side exhaust pipe 120 to be long in pipe length, so that the upstream side exhaust pipe 120 can be made longer to respond to characteristics requirements of the engine main unit 40.

Additionally, the center 121c of the catalyst unit 121 in the vehicle width direction is offset on the side of the muffler portion 124 with respect to the centerline C of the motorcycle 1 in the vehicle width direction. This configuration allows the upstream side exhaust pipe 120 to have a long pipe length.

The exhaust pipe portion 123 of the downstream side exhaust pipe 122 includes a bent portion 128 and a rearward extension portion 129. The bent portion 128 is bent toward the rear from the downstream end of the catalyst unit 121. The rearward extension portion 129 extends toward the rear from a rear end of the bent portion 128.

The muffler portion 124 is connected with a rear end of the rearward extension portion 129.

The bent portion 128 is disposed anterior to the front end 43b of the crankcase 43 and inferior to the riser 21 on the left-hand side. The bent portion 128 has a front end portion that assumes a front end portion 122a of the downstream side exhaust pipe 122. The front end portion 122a is connected with the downstream end of the catalyst unit 121 and disposed anterior to and inferior to a front end portion of the radiator 60.

The rearward extension portion 129 extends toward the rear along a path on an outer lateral side of the oil pan portion 43a of the crankcase 43. The rearward extension portion 129 extends below the radiator 60 and, in a bottom view, has a part overlapping the radiator 60 from below.

The muffler portion 124, as a muffler, is disposed on the right of the rear wheel 3 and posterior to the radiator 60. The muffler portion 124 extends in the fore-aft direction. The muffler portion 124 is fixed to the sub-arm 72. The muffler portion 124 is a pipe having a diameter greater than a diameter of the exhaust pipe portion 123 and having a plurality of expansion chambers defined thereinside by bulkheads.

Reference is made to Fig. 1. A lower end 28b of the center stand 28 in the stowed position serves as a reference point of ground clearance of the motorcycle 1. The lower end 28b is located on either lateral side of the rear wheel 3 and assumes a portion that is brought into contact with the ground surface first when the motorcycle 1 is banked to the right or left.

The catalyst unit 121 is disposed superior to the lower end 28b of the center stand 28. This arrangement allows the catalyst unit 121 to be disposed on a level that is sufficiently high relative to the road surface even with the configuration in which the catalyst unit 121 is disposed inferior to the cylinder 45.

Reference is made to Figs. 2 and 13. The cross member 23 and the fuel tank 38 are disposed anterior to the upstream side exhaust pipe 120 and the catalyst unit 121 and on a height substantially identical to a height of the upstream side exhaust pipe 120 and the catalyst unit 121. Specifically, the cross member 23 and the fuel tank 38 overlap the upstream side exhaust pipe 120 and the catalyst unit 121 from the front in a front view. Thus, the cross member 23 and the fuel tank 38 can effectively protect the upstream side exhaust pipe 120 and the catalyst unit 121.

The catalyst unit 121 is disposed on the inside in the vehicle width direction of an outer end portion 60b (Fig. 13) in the vehicle width direction in the radiator 60.

Reference is made to Figs. 3 and 9. The coolant inlet portion 85 of the lower surface 46a of the cylinder head 46 is disposed superior to the catalyst unit 121 and offset toward the front with respect to the catalyst unit 121. Thus, even with the configuration in which the coolant inlet portion 85 is provided in the lower surface 46a of the cylinder head 46, the catalyst unit 121 does not readily serve as a hindrance to the disposition of the coolant inlet portion 85.

Fig. 16 is a right side elevation view of parts around the radiator 60 and the linkage mechanism 48. Fig. 17 is a view of parts around the radiator 60 and the linkage mechanism 48 as viewed from above. It is noted that the linkage mechanism 48 is substantially bilaterally symmetrical and Fig. 16 depicts the linkage mechanism 48 on the right-hand side only.

Reference is made to Figs. 16 and 17. The link member 48c of the linkage mechanism 48 includes first pivot portions 130 and 130 (outer end portions), a left-and-right connection portion 131, and a second pivot portion 132. The first pivot portions 130 and 130 are journaled on the vehicle body-side rocking shafts 48b and 48b. The left-and-right connection portion 131 is a bar-shaped member connecting rear portions of the first pivot portions 130 and 130 in the vehicle width direction. The second pivot portion 132 extends from the left-and-right connection portion 131 downwardly and is journaled by the rocking shaft 48a.

Reference is made to Fig. 10. A rocking shaft connection portion 43d is disposed at an upper portion of the front end portion of the crankcase 43. The rocking shaft connection portion 43d supports both ends of the rocking shaft 48a. The second pivot portion 132 is located between the left and right first pivot portions 130 and 130 in the vehicle width direction and has a lower end portion connected with the rocking shaft 48a.

The rocking shaft 48a is disposed inferior to and posterior to the vehicle body-side rocking shafts 48b and 48b in a side view and disposed inside the left and right vehicle body-side rocking shafts 48b and 48b in the vehicle width direction.

Reference is made to Fig. 16. The radiator 60 includes the radiator core 107, the upper portion tank 105, and the lower portion tank 106. The upper portion tank 105 is connected with an upper edge of the radiator core 107, which has a substantially rectangular shape in a side view. The lower portion tank 106 is connected with a lower edge of the radiator core 107.

The radiator 60 is disposed to be generally inclined such that a front edge portion 107a of the radiator core 107 (front edge portion of the radiator) is inclined rearwardly with respect to a vertical line. Thus, in a side view, a rear edge portion 107b of the radiator core 107 is inclined rearwardly as with the front edge portion 107a, so that the upper portion tank 105 and the lower portion tank 106 are disposed in positions inclined upwardly toward the front.

The catalyst unit 121 is disposed inferior to a front end portion of the lower portion tank 106 in a side view. Specifically, the catalyst unit 121 is disposed inferior to the lower portion connection pipe 111 at the front end portion of the lower portion tank 106 in a side view. Thus, the catalyst unit 121 can be efficiently disposed through use of a space inferior to the front end portion of the lower portion tank 106, which is disposed in a position inclined upwardly toward the front.

The lower portion tank 106 is disposed, in a side view, posterior to the catalyst unit 121 and between the catalyst unit 121 and the cylinder portion 44 in the vertical direction.

As depicted in Fig. 16, an uppermost end 121d of the catalyst unit 121 is disposed superior to a lowermost end 60a of the radiator 60. The uppermost end 121d is an upper surface of the outer tube 121a. The lowermost end 60a is a lowermost end of the lower portion tank 106. The uppermost end 121d of the catalyst unit 121 is disposed superior to the rear end of the lower portion tank 106 of the radiator 60.

The catalyst unit 121 has, as described above, at least a part disposed to overlap the lower portion of the radiator 60 in the vertical direction. This arrangement allows the catalyst unit 121 and the radiator 60 to be compactly disposed in the vertical direction.

The rocking shaft 48a of the linkage mechanism 48 is disposed, in a side view, inferior to an upper end portion 107c of the front edge portion 107a of the radiator core 107 and anterior to the front edge portion 107a.

Specifically, the rocking shaft 48a is disposed anterior to an upper portion of the front edge portion 107a and posterior to a lower end portion 107d of the front edge portion 107a.

Specifically, the rocking shaft 48a is disposed in a space anterior to the upper portion of the radiator core 107 that is made available as a result of the radiator core 107 being inclined toward the rear.

Additionally, the rocking shaft 48a is disposed inferior to the feed-side hose 82 and posterior to the riser 21.

The rocking shaft 48a is offset toward the front from the front edge portion 107a of the radiator core 107 and is thus not covered in the radiator core 107 to be exposed laterally. This configuration allows the rocking shaft 48a to be accessed from the outside without the need to remove the radiator 60, thus facilitating maintenance and assembly of the rocking shaft 48a. Because the rocking shaft 48a is disposed inferior to the upper end portion 107c of the front edge portion 107a of the radiator core 107, the rocking shaft connection portion 43d of the crankcase 43 can have a shorter vertical length, so that the crankcase 43 can be built compactly in the vertical direction. Additionally, the rocking shaft 48a is disposed at a position at which the rocking shaft 48a does not overlap, in a side view, the support frames 25 and 25, which extend toward the rear from the risers 21 and 21 of the vehicle body frame 12.

As depicted in Fig. 16, the radiator 60 is disposed offset toward the rear from the crankshaft 42 such that a center 107e of the radiator core 107 is disposed, in a side view, posterior to and inferior to a center of rotation 42a of the crankshaft 42.

The center of rotation 42a of the crankshaft 42 is aligned with a center of rotation of the blower fan 59 (Fig. 5). Specifically, the radiator 60 is disposed such that the center 107e of the radiator core 107 is disposed posterior to the center of rotation of the blower fan 59. This configuration provides a space anterior to the front edge portion 107a of the radiator core 107, so that the rocking shaft 48a can be disposed anterior to the front edge portion 107a of the radiator core 107.

The upper portion connection pipe 110 of the radiator 60 is located immediately above the rocking shaft 48a in a side view.

As depicted in Fig. 17, the upper portion connection pipe 110 extends obliquely from the upper portion tank 105 toward the inside in the vehicle width direction and toward the front.

The upper portion connection pipe 110 is located inside in the vehicle width direction with respect to the first pivot portion 130, which assumes an outer end portion in the vehicle width direction of the linkage mechanism 48. This configuration allows the first pivot portion 130 to protect the upper portion connection pipe 110.

The feed-side hose 82, which is connected with the upper portion connection pipe 110, is routed to pass through the inside in the vehicle width direction with respect to the riser 21 and, in a side view, between the rocking shaft 48a and the vehicle body-side rocking shafts 48b toward the front. The feed-side hose 82 can thus be routed compactly.

Reference is made to Figs. 13 to 16. An upstream side exhaust gas sensor 140 is disposed in the upstream side exhaust pipe 120. The upstream side exhaust gas sensor 140 detects exhaust gas flowing through the upstream side exhaust pipe 120.

A downstream side exhaust gas sensor 141 is disposed in the downstream side exhaust pipe 122. The downstream side exhaust gas sensor 141 detects exhaust gas flowing through the downstream side exhaust pipe 122.

The upstream side exhaust gas sensor 140 and the downstream side exhaust gas sensor 141 are each, in the embodiment, an oxygen sensor that detects a concentration of oxygen contained in the exhaust gas.

It is noted that the upstream side exhaust gas sensor 140 and the downstream side exhaust gas sensor 141 may each be, for example, a temperature sensor that detects temperature of the exhaust gas.

The upstream side exhaust gas sensor 140 is formed into a bar shape. The upstream side exhaust gas sensor 140 includes a detector 140a and a terminal 140b. The detector 140a is disposed on a first end portion in the axial direction and detects oxygen. The terminal 140b is disposed on a second end portion in the axial direction. Information detected by the detector 140a is output via a harness 140c, which extends from the terminal 140b.

The downstream side exhaust gas sensor 141 is formed into a bar shape. The downstream side exhaust gas sensor 141 includes a detector 141a and a terminal 141b. The detector 141a is disposed on a first end portion in the axial direction and detects oxygen. The terminal 141b is disposed on a second end portion in the axial direction. Information detected by the detector 141a is output via a harness 141c, which extends from the terminal 141b.

The harnesses 140c and 141c are connected with an electronic control unit (not depicted) that controls, for example, the unit swing engine 13 of the motorcycle 1.

The upstream side exhaust gas sensor 140 is mounted on the downward extension portion 125 of the upstream side exhaust pipe 120.

Specifically, the upstream side exhaust gas sensor 140 is erected obliquely from a front surface of the downward extension portion 125 upwardly toward the front and toward the outside in the vehicle width direction. The upstream side exhaust gas sensor 140 is erected to be oriented toward a side opposite, in the vehicle width direction, from the side of the curved portion 127.

The upstream side exhaust gas sensor 140 is inserted in the front surface of the downward extension portion 125 obliquely from the front upward direction and from the outside in the vehicle width direction to thereby be fixed in the downward extension portion 125.

The upstream side exhaust gas sensor 140 is fixed in the downward extension portion 125 such that the detector 140a is disposed on a lower end. The terminal 140b is disposed at an upper end of the upstream side exhaust gas sensor 140.

The detector 140a is located inside the upstream side exhaust pipe 120 and the terminal 140b is exposed to the outside of the upstream side exhaust pipe 120.

The upstream side exhaust gas sensor 140 is disposed so as to be oriented toward the flow of the exhaust gas passing through the downward extension portion 125. Specifically, the upstream side exhaust gas sensor 140 is disposed in an orientation such that an axis 140d of the detector 140a crosses at an acute angle the direction of the flow of the exhaust gas through a portion at which the detector 140a is disposed.

Because the exhaust gas flows downwardly through the downward extension portion 125, the upstream side exhaust gas sensor 140 is disposed such that the detector 140a at the distal end faces downwardly. Thus, turbulence of the exhaust gas flow is reduced in areas around the detector 140a, so that the detector 140a can detect the concentration of oxygen efficiently.

The upstream side exhaust gas sensor 140, being disposed in the downward extension portion 125 disposed anterior to the catalyst unit 121, is located anterior to the catalyst unit 121. The upstream side exhaust gas sensor 140 overlaps the cylinder portion 44 in a bottom view and is disposed inferior to the cylinder portion 44.

The upstream side exhaust gas sensor 140 is inserted in the downward extension portion 125, which is located anterior to the catalyst unit 121, from the front. Thus, the upstream side exhaust gas sensor 140, when inserted in the downward extension portion 125, does not readily interfere with the catalyst unit 121. The upstream side exhaust gas sensor 140 can thus be easily mounted on the downward extension portion 125.

The upstream side exhaust gas sensor 140 is located between the risers 21 and 21 of the seat frames 20 and 20 in a plan view. The cross member 23 and the fuel tank 38 are disposed at the front anterior to the upstream side exhaust gas sensor 140. The upstream side exhaust gas sensor 140 can thus be protected by the risers 21 and 21, the cross member 23, and the fuel tank 38.

Additionally, as depicted in Fig. 2, the upstream side exhaust gas sensor 140 is covered from the outside in a lower end portion 34a of the side cover 34.

As depicted in Fig. 13, the under cover 33 has a cutout portion 33a at a portion in the rear end portion thereof located anterior to the upstream side exhaust pipe 120. The cutout portion 33a is cut out toward the front side. The cross member 23 and the fuel tank 38 are partially exposed downwardly from the cutout portion 33a.

The harness 140c of the upstream side exhaust gas sensor 140 extends from the terminal 140b toward the front and to the outside in the vehicle width direction. The cutout portion 33a is cut out toward the front so as to avoid the harness 140c of the upstream side exhaust gas sensor 140.

Reference is made to Figs. 13 to 16. The downstream side exhaust gas sensor 141 is disposed in the rearward extension portion 129 of the exhaust pipe portion 123 of the downstream side exhaust pipe 122. Specifically, a rear portion of the rearward extension portion 129 constitutes an inclined portion 129a. The inclined portion 129a is inclined upwardly toward the rear in a side view. The downstream side exhaust gas sensor 141 is mounted on an upper surface of the inclined portion 129a.

The downstream side exhaust gas sensor 141 is erected obliquely upwardly toward the front from the upper surface of the inclined portion 129a in a side view. The downstream side exhaust gas sensor 141 is inserted in the rearwardly rising upper surface of the inclined portion 129a from an obliquely forward direction and is thus fixed in the inclined portion 129a.

The downstream side exhaust gas sensor 141 is fixed in the inclined portion 129a of the downstream side exhaust pipe 122 in an orientation such that the detector 141a is on the lower end. The terminal 141b is disposed on the upper end of the downstream side exhaust gas sensor 141.

The detector 141a is located inside the downstream side exhaust pipe 122 and the terminal 141b is exposed to the outside of the downstream side exhaust pipe 122.

The downstream side exhaust gas sensor 141 is disposed so as to be oriented toward the flow of the exhaust gas passing through the inclined portion 129a. Specifically, the downstream side exhaust gas sensor 141 is disposed in an orientation such that an axis 141d of the detector 141a crosses at an acute angle the direction of the flow of the exhaust gas through a portion at which the detector 141a is disposed.

Because the exhaust gas flows upwardly toward the rear through the inclined portion 129a, the downstream side exhaust gas sensor 141 is disposed such that the detector 141a at the distal end faces rearwardly. Thus, turbulence of the exhaust gas flow is reduced in areas around the detector 141a, so that the detector 141a can detect the concentration of oxygen efficiently.

As depicted in Fig. 16, the downstream side exhaust gas sensor 141 is disposed at a position spaced away from the rear edge portion 107b of the radiator core 107 toward the rear in a side view. Specifically, the downstream side exhaust gas sensor 141 is located, in the vertical direction, between an upper end and a lower end of the rear edge portion 107b of the radiator core 107. The downstream side exhaust gas sensor 141 overlaps the radiator core 107 in the vertical direction.

The downstream side exhaust gas sensor 141 is located, in the vehicle fore-aft direction, between the rear edge portion 107b of the radiator core 107 and a front wall portion 124a of the front end portion of the muffler portion 124.

The catalyst unit 121 is located, in a side view, anterior to and inferior to the lower portion tank 106 of the radiator 60 and disposed at a position spaced away toward the front with respect to the radiator 60. The upper portion of the catalyst unit 121 overlaps the lower portion tank 106 in the vertical direction.

Specifically, the catalyst unit 121 and the downstream side exhaust gas sensor 141 are spaced apart from each other in the fore-aft direction with respect to the radiator 60. Thus, the catalyst unit 121, the radiator 60, and the downstream side exhaust gas sensor 141 can be compactly disposed in the vertical direction.

An oil filler port 150 is disposed at a rear end portion of the crankcase 43. Oil for lubricating the engine main unit 40 is poured in through the oil filler port 150. The oil filler port 150 is closed by a cap 151. The cap 151 includes a bar-shaped oil level gauge (not depicted) that extends into the oil filler port 150 to detect an oil level.

Fig. 18 is a perspective view of parts around the oil filler port 150 as viewed from above.

Reference is made to Figs. 16 and 18. The oil filler port 150 is disposed posterior to the rear edge portion 107b of the radiator core 107 and located between the rear edge portion 107b and a front edge 72a of the sub-arm 72. In the vertical direction, the oil filler port 150 is located between the upper end and the lower end of the rear edge portion 107b of the radiator core 107. The oil filler port 150 and the cap 151 are located inside the inclined portion 129a in the vehicle width direction.

The oil filler port 150 is formed into a tubular shape extending upwardly toward the rear and to the outside in the vehicle width direction. The oil filler port 150 has an open upper surface. The cap 151 threadedly engages a threaded portion formed in an inner periphery at an upper end portion of the oil filler port 150, to thereby close the opening in the oil filler port 150.

The cap 151 has an axis 151a, which extends upwardly toward the rear in a side view.

The downstream side exhaust gas sensor 141 is located immediately below the oil filler port 150 and the cap 151. The axis 141d of the detector 141a of the downstream side exhaust gas sensor 141 extends upwardly toward the front in a side view and is substantially orthogonal to the oil filler port 150 and the axis 151a of the cap 151.

As such, the downstream side exhaust gas sensor 141, which is located inferior to the cap 151, has the axis 141d crossing the axis 151a of the cap 151. Thus, the downstream side exhaust gas sensor 141 does not readily interfere with the cap 151 when the cap 151 is to be removed, so that work efficiency can be improved.

In the exhaust pipe 77, the upstream side exhaust gas sensor 140 is disposed in upstream of the catalyst unit 121 and the downstream side exhaust gas sensor 141 is disposed downstream of the catalyst unit 121. This arrangement allows the upstream side exhaust gas sensor 140 and the downstream side exhaust gas sensor 141 to detect the concentrations of the oxygen contained in the exhaust gas across the catalyst unit 121. Thus, a condition of exhaust purification performance of the catalyst unit 121 can be detected.

As described above, in accordance with the first embodiment to which the present invention is applied, the unit swing engine 13 includes the cylinder portion 44, which includes the cylinder 45 and the cylinder head 46, and the water pump unit 81, which is mounted on the side wall portion 67R of the cylinder head 46. The cylinder portion 44 includes the coolant inlet portion 85, with which the discharge port 93 of the water pump unit 81 is directly connected. The coolant inlet portion 85 protrudes to the outside from the lower surface 46a, as a wall surface of the cylinder portion 44, in a side view facing the side wall portion 67R of the cylinder head 46. In the foregoing configuration, the discharge port 93 of the water pump unit 81, which is mounted on the side wall portion 67R of the cylinder head 46, is directly connected with the coolant inlet portion 85 of the cylinder portion 44. This configuration, because of the discharge port 93 of the water pump unit 81, which is mounted on the side wall portion 67R of the cylinder head 46, being directly connected with the coolant inlet portion 85 of the cylinder portion 44, eliminates the need for, for example, a hose that connects between the water pump unit 81 and the coolant inlet portion 85, so that the cooling path structure can be simplified. Additionally, the coolant inlet portion 85 protrudes to the outside from the lower surface 46a of the cylinder portion 44 in a side view facing the side wall portion 67R of the cylinder head 46. This configuration allows the coolant inlet portion 85 to be provided without the need to complicate the structure inside the lower surface 46a of the cylinder head 46. Thus, the structure of the cylinder head 46 can be simplified.

The cylinder portion 44 includes the coolant outlet portion 86, which serves as an outlet of coolant from the cylinder portion 44, and the coolant outlet portion 86 protrudes to the outside from the upper surface 46b, as a wall surface of the cylinder head 46, in the side view facing the side wall portion 67R of the cylinder head 46. This configuration allows the coolant outlet portion 86 to be provided without the need to complicate the structure inside the upper surface 46b of the cylinder head 46. Thus, the structure of the cylinder head 46 can be simplified.

The cylinder portion 44 includes the cam chain 65, which transmits rotation of the crankshaft 42 to the valve actuating unit 63 of the cylinder head 46, and the cam chain chamber 66, through which the cam chain 65 passes. In the side view facing the side wall portion 67R, the coolant inlet portion 85 and the coolant outlet portion 86 do not overlap the cam chain chamber 66. This configuration enables the cam chain chamber 66 to be provided appropriately even for a configuration in which the cylinder portion 44 includes the coolant inlet portion 85 and the coolant outlet portion 86.

The unit swing engine 13 includes the thermo-actuator unit 84, which changes the flow paths of coolant. The thermo-actuator unit 84 switches the flow path between the normal path N, through which the coolant flows from the coolant outlet portion 86 back to the water pump unit 81 by way of, in sequence, the radiator 60 and the thermo-actuator unit 84, and the bypass path B, through which the coolant flows from the coolant outlet portion 86 back to the water pump unit 81 via directly the thermo-actuator unit 84. This configuration enables the thermo-actuator unit 84 to switch, through a simple structure, between the normal path N, in which the coolant from the coolant outlet portion 86 flows through the radiator 60, and the bypass path B, in which the coolant from the coolant outlet portion 86 bypasses the radiator 60.

The thermo-actuator unit 84 includes the in-actuator return channel 84f, through which coolant of the normal path N passes, and the in-actuator bypass channel 84e, through which coolant of the bypass path B passes. The in-actuator return channel 84f and the in-actuator bypass channel 84e are disposed coaxially with each other and communicate with each other. The thermo-actuator unit 84 is fixed to the water pump unit 81. The foregoing configuration achieves a simply structured thermo-actuator unit 84 and simplifies the mounting structure for the thermo-actuator unit 84.

The cylinder portion 44 has the cylinder axis 44a, which extends in the vehicle fore-aft direction. The catalyst unit 121 of the exhaust pipe 77, which is connected with the cylinder head 46, is disposed inferior to the cylinder 45 in the side view facing the side wall portion 67R of the cylinder head 46 and the coolant inlet portion 85 is provided in the lower surface 46a of the cylinder head 46. The foregoing configuration enables the catalyst unit 121 and the coolant inlet portion 85 to be compactly disposed through an efficient use of a space inferior to the cylinder portion 44, which extends in the fore-aft direction.

The water pump unit 81 includes the air vent path 97, which extends toward the side of the coolant outlet portion 86. This configuration enables air inside the water pump unit 81 to be efficiently discharged onto the side of the coolant outlet portion 86 via the air vent path 97.

The ignition plug 68 is disposed in the cylinder head 46. The water pump unit 81 is disposed on the side wall portion 67R, which is located on the side opposite from the side wall portion 67L, which is a side surface on which the ignition plug 68 is disposed. Because the water pump unit 81 is disposed on the side wall portion 67R, located on the side opposite from the side wall portion 67L, on which the ignition plug 68 is disposed, the water pump unit 81 and the ignition plug 68 can be efficiently disposed on the side wall portion 67R and the side wall portion 67L, respectively, of the cylinder head 46.

The cylinder portion 44 has the cylinder axis 44a extending in the vehicle fore-aft direction, the coolant inlet portion 85 is disposed on the lower surface 46a of the cylinder portion 44, the coolant outlet portion 86 is disposed on the upper surface 46b of the cylinder portion 44, and the coolant inlet portion 85, the water pump unit 81, and the coolant outlet portion 86 are disposed in juxtaposition in the vertical direction. The foregoing configuration allows the coolant inlet portion 85, the water pump unit 81, and the coolant outlet portion 86 to be lined up vertically, so that the coolant path can be achieved by a simple structure.

The water pump unit 81 includes the discharge channel 92, which constitutes a protrusion that bulges outside from the lower surface 46a of the cylinder portion 44 in the side view facing the side wall portion 67R of the cylinder head 46 and the discharge channel 92 has the discharge port 93. The foregoing configuration, because of the discharge port 93 provided for the discharge channel 92 of the water pump unit 81, enables the discharge port 93 to be connected through a simple structure with the coolant inlet portion 85.

In accordance with the first embodiment to which the present invention is applied, the motorcycle 1 includes: the water-cooled unit swing engine 13, which includes the cylinder portion 44 including the cylinder 45 and the cylinder head 46; the exhaust pipe 77, which is connected with the cylinder portion 44; and the catalyst unit 121, which is included in the exhaust pipe 77. The cylinder axis 44a of the cylinder portion 44 extends in the fore-aft direction in a side view. The catalyst unit 121 is disposed inferior to the cylinder portion 44. The cylinder portion 44 includes the coolant inlet portion 85, which is formed in the lower surface thereof and which serves as an inlet for the coolant to enter the cylinder portion 44. The coolant inlet portion 85 is disposed offset in the fore-aft direction with respect to the catalyst unit 121. The foregoing configuration results in the catalyst unit 121 and the coolant inlet portion 85 being disposed inferior to the cylinder portion 44, which extends in the fore-aft direction, and being disposed offset in the fore-aft direction. The catalyst unit 121 and the coolant inlet portion 85 can thus be efficiently disposed.

The coolant inlet portion 85 is disposed in the lower surface 46a of the cylinder head 46. This configuration allows the space inferior to the cylinder portion 44, which extends in the fore-aft direction, to be efficiently used for compactly disposing the catalyst unit 121 and the coolant inlet portion 85.

The cylinder head 46 also includes the exhaust pipe connection portion 46E, with which the exhaust pipe 77 is connected, and the coolant inlet portion 85 is adjacent to the exhaust pipe connection portion 46E. This configuration allows the exhaust pipe connection portion 46E to be efficiently cooled by the coolant.

The unit swing engine 13 is a type suspended swingably on the vehicle body frame 12 via the linkage mechanism 48, which serves as a connection portion disposed superior to the unit swing engine 13. The catalyst unit 121 is disposed so as to have the longitudinal direction oriented in the vehicle width direction and, in a plan view, overlaps the cylinder 45. This configuration including the unit swing engine 13 suspended at the upper portion thereof allows a space below the cylinder portion 44 to be made readily available. Thus, the catalyst unit 121 can be disposed inferior to the cylinder portion 44 in a position in which the catalyst unit 121 has the longitudinal direction oriented in the vehicle width direction. Additionally, because the catalyst unit 121 overlaps the cylinder 45 in a plan view, the catalyst unit 121 can be efficiently disposed so as to avoid the coolant inlet portion 85, which is formed in the lower surface of the cylinder head 46.

The coolant inlet portion 85 protrudes downwardly from the lower surface 46a, as a lower wall surface of the cylinder portion 44, in a side view. This configuration allows the coolant inlet portion 85 to be provided without the need to complicate the structure inside the lower surface 46a of the cylinder portion 44, so that the structure of the cylinder portion 44 can be simplified.

The coolant inlet portion 85 has the inlet opening 85a, which serves as an inlet for the coolant to enter the coolant inlet portion 85. The inlet opening 85a opens toward the outside in the vehicle width direction. This configuration allows the coolant to flow from the outside in the vehicle width direction into the inlet opening 85a in the coolant inlet portion 85, so that a space inferior to the coolant inlet portion 85 can be made available. The catalyst unit 121 can thus be readily disposed.

The cylinder portion 44 includes the coolant outlet portion 86, which is disposed in the upper surface 46b thereof and which assumes an outlet for the coolant to flow out of the cylinder portion 44. This configuration enables the coolant that enters the coolant inlet portion 85, provided in the lower surface 46a of the cylinder portion 44, to be discharged from the coolant outlet portion 86, provided in the upper surface 46b of the cylinder portion 44, so that the cylinder portion 44 can be efficiently cooled.

The water pump unit 81, which feeds coolant, is disposed on the side wall portion 67R, which assumes a side surface of the cylinder head 46, and the discharge port 93 of the water pump unit 81 directly communicates with the inlet opening 85a. This configuration allows the discharge port 93 of the water pump unit 81 to be connected with the coolant inlet portion 85 through a simple structure.

The cylinder portion 44 extends from the crankcase 43 in the vehicle fore-aft direction. The linkage mechanism 48 is disposed superior to the crankcase 43. In a side view, at least a part of the catalyst unit 121 is disposed inferior to the cylinder 45 and is disposed in a region between the imaginary line L1, which connects between the vehicle body-side rocking shafts 48b and 48b, which connect the linkage mechanism 48 with the vehicle body frame 12, and the front end 43b of the crankcase 43, and the imaginary line L2, which connects between the vehicle body-side rocking shafts 48b and 48b and the exhaust pipe connection portion 46E of the cylinder portion 44, with which an end of the exhaust pipe 77 is connected. The foregoing configuration enables the catalyst unit 121 to be efficiently disposed in the region between the imaginary line L1 connecting between the vehicle body-side rocking shafts 48b and 48b and the front end 43b of the crankcase 43 and the imaginary line L2 connecting between the exhaust pipe connection portion 46E and the vehicle body-side rocking shafts 48b and 48b.

In accordance with the first embodiment to which the present invention is applied, the motorcycle 1 includes: the unit swing engine 13, which includes the crankcase 43 and the cylinder portion 44 having the cylinder axis 44a extending from the crankcase 43 in the vehicle fore-aft direction and which is swingably supported on the vehicle body frame 12; the exhaust pipe 77, which is connected with the cylinder portion 44; the catalyst unit 121, which is disposed in the exhaust pipe 77; and the radiator 60, which is disposed beside the crankcase 43. The catalyst unit 121 has at least a part thereof disposed, in a side view, anterior to the crankcase 43 and inferior to the cylinder portion 44 and has the uppermost end 121d of the catalyst unit 121 located superior to the lowermost end 60a of the radiator 60.

Through the foregoing configuration, the catalyst unit 121, which has at least a part thereof disposed anterior to the crankcase 43 and inferior to the cylinder portion 44, has the uppermost end 121d located superior to the lowermost end 60a of the radiator 60, which is disposed beside the crankcase 43. Thus, the radiator 60 and the catalyst unit 121 can be compactly disposed in the vertical direction.

The radiator 60 includes the lower portion tank 106, which is disposed at a lower end portion of the radiator 60 and which is disposed in a position inclined upwardly toward the front in a side view. The catalyst unit 121 is disposed inferior to the front end portion of the lower portion tank 106 in a side view. The foregoing configuration allows a space available below the lower portion tank 106, which is disposed in a position inclined upwardly toward the front in a side view, to be used for compactly disposing the catalyst unit 121.

The lower portion tank 106 is disposed in a side view between the catalyst unit 121 and the cylinder portion 44 in the vertical direction. This configuration allows the lower portion tank 106 to be compactly disposed between the catalyst unit 121 and the cylinder portion 44.

The lower portion tank 106 has, at a front end thereof, the lower portion connection pipe 111, which protrudes toward the front. The catalyst unit 121 is disposed inferior to the lower portion connection pipe 111 in a side view. This configuration allows a space available inferior to the lower portion connection pipe 111 to be used for compactly disposing the catalyst unit 121.

The unit swing engine 13 is supported swingably via the rocking shaft 48a, which is disposed at an upper portion of the unit swing engine 13. The radiator 60 includes the radiator core 107, which has a rectangular shape in a side view. The radiator 60 is disposed such that the center 107e of the radiator core 107 is disposed, in a side view, posterior to the center of rotation 42a of the crankshaft 42 and the rocking shaft 48a is disposed anterior to the front edge portion 107a of the radiator 60. Through the foregoing configuration, the rocking shaft 48a of the unit swing engine 13 is disposed anterior to the front edge portion 107a of the radiator 60, so that the unit swing engine 13 can be made compact in the vertical direction.

The catalyst unit 121 is disposed so as to have a longitudinal direction oriented in the vehicle width direction and disposed offset on a first side in the vehicle width direction with respect to the centerline C that marks a central portion in the vehicle width direction of the motorcycle 1. This configuration allows a space to be readily made available in the vehicle width direction of the catalyst unit 121, so that the catalyst unit 121 can be easily disposed.

The catalyst unit 121 is disposed inside in the vehicle width direction of the outer end portion 60b of the radiator 60 in the vehicle width direction. This configuration allows the catalyst unit 121 to be compactly disposed so as to avoid the radiator 60 in the vehicle width direction.

In accordance with the first embodiment to which the present invention is applied, the motorcycle 1 includes: the unit swing engine 13, which is swingably supported on the vehicle body frame 12 via the rocking shaft 48a; and the radiator 60, which is disposed beside the unit swing engine 13. The rocking shaft 48a is disposed at an upper portion of the unit swing engine 13 and is disposed, in a side view, anterior to the front edge portion 107a of the radiator 60.

Through the foregoing configuration, the rocking shaft 48a is disposed at the upper portion of the unit swing engine 13 and in a side view, disposed anterior to the front edge portion 107a of the radiator 60. The unit swing engine 13 can thus be disposed compactly in the vertical direction and access can be readily gained to the rocking shaft 48a.

The radiator 60 is disposed to be inclined such that the front edge portion 107a is inclined rearwardly in a side view and the rocking shaft 48a is disposed posterior to the lower end portion 107d of the front edge portion 107a in a side view. The foregoing configuration enables the rocking shaft 48a to be compactly disposed in a space that is formed in an area superior to the lower end portion 107d of the front edge portion 107a of the radiator 60 made available as a result of the radiator 60 being inclined.

The unit swing engine 13 is swingably supported on the vehicle body frame 12 via the linkage mechanism 48. The linkage mechanism 48 includes the rocking shaft 48a, the vehicle body-side rocking shafts 48b and 48b, which are disposed on the vehicle body frame 12, and the link member 48c, which connects between the vehicle body-side rocking shafts 48b and 48b and the rocking shaft 48a. The upper portion connection pipe 110, to which the feed-side hose 82 is connected, is disposed at an upper portion of the radiator 60. The upper portion connection pipe 110 is disposed immediately above the rocking shaft 48a. The feed-side hose 82 is routed between the rocking shaft 48a and the vehicle body-side rocking shafts 48b and 48b in a side view.

The foregoing configurations allow the upper portion connection pipe 110 and the feed-side hose 82 to be compactly disposed in a space between the rocking shaft 48a and the vehicle body-side rocking shafts 48b and 48b.

The upper portion connection pipe 110 extends from the upper portion of the radiator 60 toward the inside in the vehicle width direction and toward the front. The upper portion connection pipe 110 is disposed inside the first pivot portion 130, which assumes an outer end portion in the vehicle width direction of the linkage mechanism 48. The foregoing configuration allows the upper portion connection pipe 110 and the feed-side hose 82 to be compactly disposed in the vehicle width direction and allows the first pivot portion 130 to protect the upper portion connection pipe 110 and the feed-side hose 82.

In accordance with the first embodiment to which the present invention is applied, the motorcycle 1 includes: the unit swing engine 13, which includes the crankcase 43 and the cylinder portion 44 having the cylinder axis 44a extending from the crankcase 43 in the vehicle fore-aft direction and which is swingably supported on the vehicle body frame 12; the exhaust pipe 77, which is connected with the cylinder portion 44; the catalyst unit 121, which is disposed in the exhaust pipe 77; and the upstream side exhaust gas sensor 140. The unit swing engine 13 is supported on the vehicle body frame 12 via the vehicle body-side rocking shaft 48b, which is disposed superior to the unit swing engine 13. At least a part of the catalyst unit 121 is disposed, in a side view, inferior to the cylinder 45 and is disposed in the region between the imaginary line L1, which connects between the vehicle body-side rocking shaft 48b and the front end 43b of the crankcase 43, and the imaginary line L2, which connects between the vehicle body-side rocking shaft 48b and the exhaust pipe connection portion 46E of the cylinder portion 44, with which an end of the exhaust pipe 77 is connected. The exhaust pipe 77 includes the upstream side exhaust pipe 120, which is located upstream of the catalyst unit 121. The upstream side exhaust gas sensor 140 is disposed in the upstream side exhaust pipe 120 at a position inferior to the cylinder portion 44.

The foregoing configurations enable the catalyst unit 121 to be disposed in the region between the imaginary line L1, which connects between the vehicle body-side rocking shaft 48b and the front end 43b of the crankcase 43, and the imaginary line L2, which connects between the exhaust pipe connection portion 46E and the vehicle body-side rocking shaft 48b in a space inferior to the cylinder portion 44. Additionally, the foregoing configurations enable the upstream side exhaust gas sensor 140 to be disposed in the upstream side exhaust pipe 120 at the position inferior to the cylinder portion 44. Thus, the catalyst unit 121 and the upstream side exhaust gas sensor 140 can be efficiently disposed in the space inferior to the cylinder portion 44. Additionally, exhaust gas upstream of the catalyst unit 121 can be detected.

The catalyst unit 121 and the upstream side exhaust gas sensor 140 are disposed inside the risers 21 and 21 of the vehicle body frame 12 in a plan view. This configuration allows the catalyst unit 121 and the upstream side exhaust gas sensor 140 to be protected by the vehicle body frame 12 and allows centralization of mass to be promoted in the vehicle width direction.

The upstream side exhaust gas sensor 140 is disposed in a portion of the upstream side exhaust pipe 120 anterior to the catalyst unit 121. The upstream side exhaust gas sensor 140 is disposed in the upstream side exhaust pipe 120 on the front side. Through the foregoing configurations, the upstream side exhaust gas sensor 140 is disposed in the portion of the upstream side exhaust pipe 120 anterior to the catalyst unit 121 on the front side. The catalyst unit 121 can thus be prevented from interfering with the upstream side exhaust gas sensor 140. The upstream side exhaust gas sensor 140 can thus be provided easily.

The upstream side exhaust gas sensor 140 includes the detector 140a, which detects exhaust gas, and the terminal 140b, which protrudes to the outside of the upstream side exhaust pipe 120. The terminal 140b is disposed at a position superior to the detector 140a. The foregoing configurations prevent the upstream side exhaust gas sensor 140 from protruding downwardly, so that the upstream side exhaust gas sensor 140 can be compactly disposed.

The upstream side exhaust gas sensor 140 is disposed so as to extend along the exhaust flow. This configuration enables the upstream side exhaust gas sensor 140 to prevent turbulence of the exhaust flow, so that the exhaust gas can be readily detected by the upstream side exhaust gas sensor 140.

Additionally, in a side view, the upstream side exhaust gas sensor 140 is covered in the side cover 34, which covers the vehicle body from the outside. This configuration allows the side cover 34 to be used for protecting the upstream side exhaust gas sensor 140 and allows appearance to be improved.

The fuel tank 38 is disposed anterior to the upstream side exhaust gas sensor 140. This configuration allows the upstream side exhaust gas sensor 140 to be protected by the fuel tank 38.

The under cover 33, which covers the vehicle body from below, has the cutout portion 33a for avoiding the harness 140c of the upstream side exhaust gas sensor 140. This configuration allows the vehicle body to be protected by the under cover 33 and the harness 140c of the upstream side exhaust gas sensor 140 to be easily disposed through use of the cutout portion 33a for avoiding the under cover 33.

The upstream side exhaust pipe 120 includes: the downward extension portion 125, which extends from the exhaust pipe connection portion 46E downwardly; the lateral extension portion 126, which extends from a lower end of the downward extension portion 125 toward the outside in the vehicle width direction; and the curved portion 127, which is bent into a U-shape from an outer end of the lateral extension portion 126 toward the rear and toward the inside in the vehicle width direction and is connected with the catalyst unit 121, which is disposed posterior to the downward extension portion 125. The upstream side exhaust gas sensor 140 is disposed in the downward extension portion 125.

Through the foregoing configurations, the upstream side exhaust gas sensor 140 is disposed in the downward extension portion 125, so that the exhaust gas near the exhaust pipe connection portion 46E can be detected by the upstream side exhaust gas sensor 140.

In accordance with the first embodiment to which the present invention is applied, the motorcycle 1 includes: the unit swing engine 13, which includes the crankcase 43 and the cylinder portion 44 having the cylinder axis 44a extending from the crankcase 43 in the vehicle fore-aft direction and which is swingably supported on the vehicle body frame 12; the radiator 60, which is disposed beside the crankcase 43; the exhaust pipe 77, which is connected with the cylinder portion 44; the catalyst unit 121, which is disposed in the exhaust pipe 77; and the downstream side exhaust gas sensor 141, which is disposed in the exhaust pipe 77. In a side view, the catalyst unit 121 and the downstream side exhaust gas sensor 141 are disposed to be spaced apart from each other in the vehicle fore-aft direction with respect to the radiator 60.

Through the foregoing configurations, the catalyst unit 121 and the downstream side exhaust gas sensor 141 are spaced apart from each other in the vehicle fore-aft direction with respect to the radiator 60, so that the catalyst unit 121, the downstream side exhaust gas sensor 141, and the radiator 60 can be compactly disposed in the vertical direction.

The unit swing engine 13 is swingably supported on the vehicle body frame 12 via the linkage mechanism 48, which serves as a connection portion disposed superior to the unit swing engine 13. The catalyst unit 121 is disposed anterior to the crankcase 43 and inferior to the cylinder portion 44. The foregoing configurations result in the linkage mechanism 48 being disposed superior to the unit swing engine 13, so that a space can be easily obtained in an area inferior to the cylinder portion 44. The catalyst unit 121 can thus be efficiently disposed through use of the space inferior to the cylinder portion 44.

The exhaust pipe 77 includes the downstream side exhaust pipe 122, which is located downstream of the catalyst unit 121 and the downstream side exhaust gas sensor 141 is disposed in the downstream side exhaust pipe 122. The foregoing configurations allow the downstream side exhaust gas sensor 141 to detect exhaust that has flowed past the catalyst unit 121.

The crankcase 43 has the oil filler port 150 and the cap 151, which closes the oil filler port 150. The downstream side exhaust gas sensor 141 is disposed posterior to the radiator 60 and inferior to the cap 151. The foregoing configurations allows a space available posterior to the radiator 60 and inferior to the cap 151 to be used for efficiently disposing the downstream side exhaust gas sensor 141.

The axis 141d of the downstream side exhaust gas sensor 141 crosses the axis 151a of the cap 151 in a side view. This configuration allows the downstream side exhaust gas sensor 141 not to become a hindrance to gain access to the cap 151, so that access can be readily gained to the cap 151.

The downstream side exhaust gas sensor 141 includes the detector 141a, which detects exhaust gas, and the terminal 141b, which protrudes to the outside of the downstream side exhaust pipe 122. The downstream side exhaust gas sensor 141 is disposed such that the terminal 141b is located superior to the detector 141a.

The foregoing configurations allow the downstream side exhaust gas sensor 141 to be prevented from protruding downwardly, so that the downstream side exhaust gas sensor 141 can be compactly disposed.

The downstream side exhaust gas sensor 141 is disposed so as to extend along the exhaust flow. This configuration enables the downstream side exhaust gas sensor 141 to prevent turbulence of the exhaust flow, so that the exhaust gas can be readily detected by the downstream side exhaust gas sensor 141.

### [Modification]

Fig. 19 is a plan view of an exhaust pipe 77 according to a modification of the first embodiment, as viewed from above. Fig. 20 is a perspective view of the exhaust pipe 77 in the modification, as viewed from a right lateral side.

Parts that are constructed identically to the previously-discussed parts in the first embodiment are assigned identical reference numerals and are not further discussed.

The present modification represents a variation in positions at which the upstream side exhaust gas sensor and the downstream side exhaust gas sensor are disposed.

Figs. 13 and 16 indicate positions at which the upstream side exhaust gas sensor and the downstream side exhaust gas sensor in the modification are disposed using imaginary lines.

Upstream side exhaust gas sensors 240, 340, and 440 to be described below are each identical to the upstream side exhaust gas sensor 140 and each include a detector 140a and a terminal 140b.

Similarly, downstream side exhaust gas sensor 241, 341, and 441 to be described below are each identical to the downstream side exhaust gas sensor 141 and each include a detector 141a and a terminal 141b.

Reference is made to Figs. 13, 16, 19, and 20. In place of the upstream side exhaust gas sensor 140 in the first embodiment, the upstream side exhaust gas sensor 240 may be disposed in the curved portion 127 of the upstream side exhaust pipe 120. The upstream side exhaust gas sensor 240 is located inferior to the cylinder portion 44 in a side view.

The upstream side exhaust gas sensor 240 is disposed in the upstream side exhaust pipe 120 at a position anterior to the catalyst unit 121. The upstream side exhaust gas sensor 240 is mounted on an upper surface of an outer surface portion 127a of the curved portion 127.

The upstream side exhaust gas sensor 240 is disposed so as to extend along the exhaust flow through the curved portion 127 and such that the terminal 140b is located superior to the detector 140a.

The upstream side exhaust gas sensor 240 is erected from the outer surface portion 127a of the curved portion 127 obliquely upwardly toward the front and toward the outside in the vehicle width direction.

With reference to a virtual axis 127b, which passes through a center of the curved portion 127, a greater amount of the exhaust gas passing through the curved portion 127 passes through an outer surface side of a curve in the curved portion 127 than an inner surface side of the curve in the curved portion 127 because of a centrifugal force involved. The upstream side exhaust gas sensor 240 is disposed on the outer surface side of the curve in the curved portion 127. Thus, the upstream side exhaust gas sensor 240 can efficiently detect the exhaust gas.

Because the curved portion 127 is disposed on a side closer to the outside in the vehicle width direction than the exhaust pipe connection portion 46E is, access to the upstream side exhaust gas sensor 240 in the curved portion 127 can be readily gained from the outside. The upstream side exhaust gas sensor 240 thus offers favorable maintainability.

In place of the upstream side exhaust gas sensor 140 in the first embodiment, the upstream side exhaust gas sensor 340 may be disposed in the downward extension portion 125 of the upstream side exhaust pipe 120.

The upstream side exhaust gas sensor 340 is disposed in the upstream side exhaust pipe 120 at a position anterior to the catalyst unit 121. The upstream side exhaust gas sensor 340 is disposed on a side surface opposite from the curved portion 127 in the downward extension portion 125. The upstream side exhaust gas sensor 340 overlaps, in a bottom view, the cylinder portion 44 and is disposed inferior to the cylinder portion 44. The upstream side exhaust gas sensor 340 is located between the risers 21 and 21 in a plan view. The upstream side exhaust gas sensor 340 is covered in the lower end portion 34a (Fig. 2) of the side cover 34 from the outside.

The upstream side exhaust gas sensor 340 is disposed so as to extend along the exhaust flow through the downward extension portion 125 and such that the terminal 140b is located superior to the detector 140a.

The upstream side exhaust gas sensor 340 is erected from a side surface of the downward extension portion 125 obliquely to the outside in the vehicle width direction and upwardly.

In place of the upstream side exhaust gas sensor 140 in the first embodiment, the upstream side exhaust gas sensor 440 may be disposed in the lateral extension portion 126 of the upstream side exhaust pipe 120.

The upstream side exhaust gas sensor 440 is disposed in the upstream side exhaust pipe 120 at a position anterior to the catalyst unit 121. The upstream side exhaust gas sensor 440 is inserted in a front surface lateral extension portion 126 from the front side. The upstream side exhaust gas sensor 440 overlaps, in a bottom view, the cylinder portion 44 and is disposed inferior to the cylinder portion 44. The upstream side exhaust gas sensor 440 is located between the risers 21 and 21 in a plan view. The upstream side exhaust gas sensor 440 is covered in the lower end portion 34a of the side cover 34 from the outside.

The upstream side exhaust gas sensor 440 is disposed so as to extend along the exhaust flow through the lateral extension portion 126 and such that the terminal 140b is located superior to the detector 140a.

The upstream side exhaust gas sensor 440 is erected from a front surface of the lateral extension portion 126 obliquely upwardly toward the front and toward the outside in the vehicle width direction opposite from the curved portion 127.

In place of the downstream side exhaust gas sensor 141 in the first embodiment, the downstream side exhaust gas sensor 241 may be disposed in the bent portion 128 of the downstream side exhaust pipe 122.

The downstream side exhaust gas sensor 241 is inserted in an upper surface at the front portion of the bent portion 128 from an upper front side.

The downstream side exhaust gas sensor 241 is disposed such that the terminal 141b is located superior to the detector 141a.

The downstream side exhaust gas sensor 241 is erected from the upper surface at the front portion of the bent portion 128 obliquely upwardly toward the front. The radiator 60 is disposed to be inclined such that the front edge portion 107a is inclined rearwardly in a side view and the downstream side exhaust gas sensor 241 is disposed inferior to the return-side hose 83.

In the side view depicted in Fig. 16, the downstream side exhaust gas sensor 241 and the catalyst unit 121 are disposed to be spaced away toward the front from the radiator 60. The downstream side exhaust gas sensor 241, the catalyst unit 121, and the radiator 60 can thus be compactly disposed in the vertical direction.

The downstream side exhaust gas sensor 241 has a lower portion overlapping the catalyst unit 121 in the side view. The downstream side exhaust gas sensor 241 can thus be compactly disposed in the vertical direction.

The downstream side exhaust pipe 122 has the front portion extending toward the front along the lower portion tank 106 of the radiator 60, which is inclined upwardly toward the front. The front end portion 122a of the downstream side exhaust pipe 122 is located anterior to and inferior to the front end portion of the lower portion tank 106 and the upper portion of the downstream side exhaust pipe 122 including the uppermost end of the front end portion 122a is located superior to the lowermost end 60a of the radiator 60.

The downstream side exhaust gas sensor 241 is disposed at the upper portion of the front end portion 122a of the downstream side exhaust pipe 122 and is disposed superior to the lowermost end 60a of the radiator 60 at a position anterior to the radiator 60. The downstream side exhaust gas sensor 241 can thus be disposed compactly in the vertical direction.

In place of the downstream side exhaust gas sensor 141 in the first embodiment, the downstream side exhaust gas sensor 341 may be disposed in the muffler portion 124 of the downstream side exhaust pipe 122.

The downstream side exhaust gas sensor 341 is inserted in an upper surface at the front end portion of the muffler portion 124 from an upper front side. The front end portion of the muffler portion 124, in which the downstream side exhaust gas sensor 341 is mounted, is formed into a taper having a diameter increasing toward the rear side.

The downstream side exhaust gas sensor 341 is disposed such that the terminal 141b is located superior to the detector 141a.

The downstream side exhaust gas sensor 341 is erected from the upper surface at the front portion of the front wall portion 124a of the muffler portion 124 obliquely upwardly toward the front and inwardly in the vehicle width direction.

In the side view depicted in Fig. 16, the downstream side exhaust gas sensor 341 is disposed to be spaced away toward the rear from the radiator 60. Specifically, the downstream side exhaust gas sensor 341 and the catalyst unit 121 are disposed to be spaced away in the fore-aft direction from the radiator 60. The downstream side exhaust gas sensor 341, the catalyst unit 121, and the radiator 60 can thus be compactly disposed in the vertical direction.

The downstream side exhaust gas sensor 341 is disposed inferior to the cap 151. The axis 141d of the detector 141a of the downstream side exhaust gas sensor 341 crosses the axis 151a of the cap 151.

In place of the downstream side exhaust gas sensor 141 in the first embodiment, the downstream side exhaust gas sensor 441 may be disposed in the bent portion 128 of the downstream side exhaust pipe 122.

The downstream side exhaust gas sensor 441 is inserted in an upper surface at the rear portion of the bent portion 128 from the outside in the vehicle width direction and an upper side.

The downstream side exhaust gas sensor 441 is disposed such that the terminal 141b is located superior to the detector 141a.

The downstream side exhaust gas sensor 441 is erected from the upper surface at the rear portion of the bent portion 128 obliquely outwardly in the vehicle width direction and upwardly.

### [Second Embodiment]

A second embodiment to which the present invention is applied will be described below with reference to Figs. 21 and 22. In describing the second embodiment, parts that are constructed identically to the previously-discussed parts in the first embodiment are assigned identical reference numerals and are not further discussed.

The second embodiment differs from the first embodiment in configurations of an exhaust pipe 277 and a linkage mechanism 248.

Fig. 21 is a right side elevation view of parts around a radiator 60 and the linkage mechanism 248 according to the second embodiment. Fig. 22 is a view of a unit swing engine 213 and parts therearound according to the second embodiment as viewed from below.

As depicted in Figs. 21 and 22, in the second embodiment, the unit swing engine 213 is swingably supported on a vehicle body frame 12 via the linkage mechanism 248 disposed at a lower portion of a crankcase 43.

The linkage mechanism 248 includes a vehicle body-side connection portion 248a, an engine-side connection portion 248b, and a pivot shaft 248c. The vehicle body-side connection portion 248a is disposed on the vehicle body frame 12. The engine-side connection portion 248b extends toward the front from a front portion at a lower portion of the crankcase 43. The pivot shaft 248c connects the vehicle body-side connection portion 248a with the engine-side connection portion 248b. The unit swing engine 213 swings about the pivot shaft 248c, which extends in the vehicle width direction. The engine-side connection portion 248b is disposed at a portion of the crankcase 43 inferior to a cylinder axis 44a of a cylinder portion 44.

The exhaust pipe 277 includes a first exhaust pipe 220, a catalyst unit 221, and a second exhaust pipe 222. The first exhaust pipe 220 is connected with an exhaust pipe connection portion 46E of a cylinder head 46. The catalyst unit 221 is connected with a downstream end of the first exhaust pipe 220. The second exhaust pipe 222 is connected with a downstream end of the catalyst unit 221.

The catalyst unit 221 is located between the first exhaust pipe 220 and the second exhaust pipe 222 in the exhaust flow direction and is disposed midway in the exhaust pipe 277.

The first exhaust pipe 220 extends from the exhaust pipe connection portion 46E along a path below the cylinder portion 44 toward the outside in the vehicle width direction. The downstream end of the first exhaust pipe 220 is bent toward the rear at a position inferior to a riser 21 on the right-hand side.

The catalyst unit 221 is a tubular member including a catalyst carrier thereinside. The catalyst unit 221 extends toward the rear from the downstream end of the first exhaust pipe 220. The catalyst unit 221 has a longitudinal direction oriented in the fore-aft direction and is disposed in a position inclined downwardly toward the rear in a side view.

The catalyst unit 221 is disposed inferior to the riser 21 on the right-hand side at a position outside in the vehicle width direction relative to the cylinder portion 44. In the bottom view of Fig. 22, the catalyst unit 221 includes an overlapping portion 221a, which overlaps the front portion of the radiator 60 from below.

The catalyst unit 221 is disposed, in a side view, anterior to a front end 43b of the crankcase 43 and inferior to the cylinder portion 44. The catalyst unit 221 has a rear portion disposed, in a side view, inferior to a lower portion connection pipe 111, which assumes a front end portion at a lower portion of the radiator 60.

The catalyst unit 221 has an uppermost end 221d located superior to a lowermost end 60a of the radiator 60.

Disposing the catalyst unit 221 so as to overlap the lower portion of the radiator 60 in the vertical direction as described above enables the catalyst unit 221 and the radiator 60 to be compactly disposed in the vertical direction.

The second exhaust pipe 222 extends from the downstream end of the catalyst unit 221 toward the rear. The second exhaust pipe 222 includes a muffler portion 224 disposed at a rear end thereof.

The first embodiment and the second embodiment each represent one exemplary mode to which the present invention is applied and the present invention is not limited to the first embodiment and the second embodiment.

The coolant inlet portion 85 and the coolant outlet portion 86, which have been described in the above embodiments as being disposed in the cylinder head 46, are illustrative only and not limiting. For example, the coolant inlet portion may be disposed in the lower surface of the cylinder 45 and the coolant outlet portion may be disposed in the upper surface of the cylinder 45.

While the embodiments have been described as applied to the motorcycle 1 as the saddled vehicle, the invention is also applicable to other types of saddled vehicles including three-wheel saddled vehicles having two front or rear wheels and four-or-more-wheel saddled vehicles.

### [Description of Reference Symbols]

13 Unit swing engine (internal combustion engine)
42 Crankshaft
44 Cylinder portion
44a Cylinder axis
45 Cylinder
46 Cylinder head
46a Lower surface (wall surface of cylinder portion, lower surface of cylinder portion, lower surface of cylinder head)
46b Upper surface (wall surface of cylinder portion, upper surface of cylinder portion)
60 Radiator
63 Valve actuating unit
65 Cam chain
66 Cam chain chamber
67L Side wall portion (side surface in which ignition plug is disposed)
67R Side wall portion (side surface)
68 Ignition plug
77 Exhaust pipe
81 Water pump unit
84 Thermo-actuator unit
84e In-actuator bypass channel (bypass channel)
84f In-actuator return channel (normal channel through which coolant passes)
85 Coolant inlet portion
86 Coolant outlet portion
92 Discharge channel (protruding portion)
93 Discharge port
97 Air vent path
121 Catalyst unit
B Bypass path
N Normal path

## Claims

1. A saddle riding vehicle, comprising:
a unit swing engine (13) that includes a crankcase (43) and a cylinder portion (44) having a cylinder axis (44a) extending from the crankcase (43) in a vehicle fore-aft direction and that is swingably supported on a vehicle body frame (12);
an exhaust pipe (77) connected with the cylinder portion (44);
a catalyst unit (121) disposed in the exhaust pipe (77); an exhaust gas sensor (140, 240, 340, 440) disposed in the exhaust pipe (77), and
a muffler (124) that is a downstream end portion of the exhaust pipe (77), wherein the unit swing engine (13) is supported on the vehicle body frame (12) via a vehicle body-side rocking shaft (48b) disposed superior to the unit swing engine (13),
in a side view, at least a part of the catalyst unit (121) is disposed inferior to the cylinder portion (44) and is disposed in a region between a first imaginary line (L1) and a second imaginary line (L2), the first imaginary line (L1) connecting the vehicle body-side rocking shaft (48b) and a front end (43b) of the crankcase (43), the second imaginary line (L2) connecting an exhaust pipe connection portion (46E) of the cylinder portion (44), with which an end of the exhaust pipe (77) is connected, and the vehicle body-side rocking shaft (48b),
the exhaust pipe (77) includes an upstream side exhaust pipe (120) located upstream of the catalyst unit (121), **characterized in that** the upstream side exhaust pipe (120) includes a downward extension portion (125) that extends from the exhaust pipe connection portion (46E) downwardly, a lateral extension portion (126) that extends from a lower end of the downward extension portion (125) toward a side opposite from the muffler (124) in the vehicle width direction, and a curved portion (127) that is bent from an outer end of the lateral extension portion (126) toward a side of the muffler (124) and connected to the catalyst unit (121) disposed posterior to the downward extension portion (125),
and
the exhaust gas sensor (140, 240, 340, 440) is disposed in the upstream side exhaust pipe (120) at a position inferior to the cylinder portion (44).

2. The saddle riding vehicle according to claim 1, wherein
the catalyst unit (121) and the exhaust gas sensor (140, 340, 440) are disposed inside the vehicle body frame (12) in a plan view.

3. The saddle riding vehicle according to claim 1 or 2, wherein
the catalyst unit (121) is disposed so as to have a longitudinal direction oriented in a vehicle width direction, and
the catalyst unit (121) is disposed offset on a first side in the vehicle width direction with respect to a central portion (C) in the vehicle width direction of the saddle riding vehicle.

4. The saddle riding vehicle according to any one of claims 1 to 3, wherein
the exhaust gas sensor (140, 440) is disposed in the upstream side exhaust pipe (120) at a position anterior to the catalyst unit (121), and
the exhaust gas sensor (140, 440) is disposed in the upstream side exhaust pipe (120) from a front side.

5. The saddle riding vehicle according to any one of claims 1 to 4, wherein
the exhaust gas sensor (140, 240, 340, 440) includes a detector (140a) that detects exhaust gas and a terminal (140b) that protrudes to an outside of the upstream side exhaust pipe (120), and
the terminal (140b) is disposed at a position superior to the detector (140a).

6. The saddle riding vehicle according to any one of claims 1 to 5, wherein
the exhaust gas sensor (140, 240, 340, 440) is disposed so as to extend along an exhaust flow.

7. The saddle riding vehicle according to any one of claims 1 to 6, wherein
in a side view, the exhaust gas sensor (140, 340, 440) is covered from an outside in a side cover (34) that covers a vehicle body from a side.

8. The saddle riding vehicle according to any one of claims 1 to 7, further comprising:
a fuel tank (38) disposed anterior to the exhaust gas sensor (140, 240, 340, 440).

9. The saddle riding vehicle according to any one of claims 1 to 8, further comprising:
an under cover (33) that covers the vehicle body from below, wherein
the under cover (33) has a cutout portion (33a) that avoids a harness (140c) of the upstream side exhaust gas sensor (140).

10. The saddle riding vehicle according to any one of claims 1 to 9, wherein
the exhaust gas sensor (140, 340) is disposed in the downward extension portion (125).

11. The saddle riding vehicle according to any one of claims 1 to 9, wherein
the exhaust gas sensor (240) is disposed in the curved portion (127).

12. The saddle riding vehicle according to claim 11, wherein
with reference to an imaginary axis (127b) that passes through a center of the curved portion (127), the exhaust gas sensor (240) is disposed on an outer surface side of a curve in the curved portion (127).

## Patentansprüche

1. Sattelsitzfahrzeug, das aufweist:
einen Schwingeinheitsmotor (13), der ein Kurbelwellengehäuse (43) und einen Zylinderbereich (44) aufweist, der eine Zylinderachse (44a) hat, die vom Kurbelwellengehäuse (43) in einer Fahrzeugrichtung von vorne nach hinten verläuft und der schwingbar an einem Fahrzeugkarosserierahmen (12) gehalten wird;
ein Abgasrohr (77), das mit dem Zylinderbereich (44) verbunden ist;
eine Katalysatoreinheit (121), die im Abgasrohr (77) angeordnet ist;
einen Abgassensor (140, 240, 340, 440), der im Abgasrohr (77) angeordnet ist, und
einen Auspufftopf (124), der ein nachgelagerter Endbereich des Abgasrohrs (77) ist, wobei
der Schwingeinheitsmotor (13) an dem Fahrzeugkarosserierahmen (12) über eine Schwingwelle (48b) an der Fahrzeugkarosserieseite, die über dem Schwingeinheitsmotor (13) angeordnet ist, gehalten wird,
in einer Seitenansicht, wenigstens ein Teil der Katalysatoreinheit (121) unter dem Zylinderbereich (44) angeordnet ist und in einem Gebiet zwischen einer ersten imaginären Linie (L1) und einer zweiten imaginären Linie (L2) angeordnet ist, wobei die erste imaginäre Linie (L1) die Schwingwelle (48b) an der Fahrzeugkarosserieseite und ein vorderes Ende (43b) des Kurbelwellengehäuses (43) verbindet, wobei die zweite imaginäre Linie (L2) einen Abgasrohr-Verbindungsbereich (46E) des Zylinderbereichs (44), mit dem ein Ende des Abgasrohrs (77) verbunden ist, und die Schwingwelle (48b) an der Fahrzeugkarosserieseite verbindet,
das Abgasrohr (77) ein Abgasrohr (120) an der vorgelagerten Seite aufweist, das sich vorgelagert zur Katalysatoreinheit (121) befindet,
**dadurch gekennzeichnet, dass**
das Abgasrohr (120) an der vorgelagerten Seite einen nach unten verlaufenden Fortsetzungsbereich (125) aufweist, der vom Abgasrohr-Verbindungsbereich (46E) nach unten verläuft, einen seitlichen Fortsetzungsbereich (126), der von einem unteren Ende des nach unten verlaufenden Fortsetzungsbereichs (125) in Richtung einer Seite gegenüberliegend zum Auspufftopf (124) in der Fahrzeugbreitenrichtung verläuft, und ein gebogener Bereich (127), der von einem äußeren Ende des seitlichen Fortsetzungsbereichs (126) in Richtung einer Seite des Auspufftopfs (124) gebogen ist und mit der Katalysatoreinheit (121) verbunden ist, hinter dem nach unten verlaufenden Bereich (125) angeordnet ist, und
der Abgassensor (140, 240, 340, 440) im Abgasrohr (120) an der vorgelagerten Seite an einer Position unter dem Zylinderbereich (44) angeordnet ist.

2. Sattelsitzfahrzeug nach Anspruch 1, wobei:
die Katalysatoreinheit (121) und der Abgassensor (140, 340, 440) in der Draufsicht innen im Fahrzeugkarosserierahmen (12) angeordnet sind.

3. Sattelsitzfahrzeug nach Anspruch 1 oder 2, wobei:
die Katalysatoreinheit (121) so angeordnet ist, um eine in einer Fahrzeugbreitenrichtung ausgerichtete Längsrichtung zu haben, und
die Katalysatoreinheit (121) an einer ersten Seite in der Fahrzeugbreitenrichtung bezüglich eines Mittenbereichs (C) in der Fahrzeugbreitenrichtung des Sattelsitzfahrzeugs versetzt angeordnet ist.

4. Sattelsitzfahrzeug nach einem der Ansprüche 1 bis 3, wobei
der Abgassensor (140, 440) im Abgasrohr (120) an der vorgelagerten Seite an einer Position vor der Katalysatoreinheit (121) angeordnet ist, und
der Abgassensor (140, 440) im Abgasrohr (120) an der vorgelagerten Seite von vorne angeordnet ist.

5. Sattelsitzfahrzeug nach einem der Ansprüche 1 bis 4, wobei der Abgassensor (140, 240, 340, 440) einen Detektor (140a) aufweist, der Abgas erfasst und einen Endpunkt (140b), der zu einer Außenseite des Abgasrohrs (120) an der vorgelagerten Seite hervorsteht, und
der Endpunkt (140b) an einer Position über dem Detektor (140a) angeordnet ist.

6. Sattelsitzfahrzeug nach einem der Ansprüche 1 bis 5, wobei
der Abgassensor (140, 240, 340, 440) so angeordnet ist, um entlang eines Abgasstroms zu verlaufen.

7. Sattelsitzfahrzeug nach einem der Ansprüche 1 bis 6, wobei in einer Seitenansicht der Abgassensor (140, 340, 440) von außen in einer Seitenverkleidung (34) verkleidet ist, die eine Fahrzeugkarosserie von einer Seite verkleidet.

8. Sattelsitzfahrzeug nach einem der Ansprüche 1 bis 7, das weiterhin aufweist:
einen Kraftstofftank (38), der vor dem Abgassensor (140, 240, 340, 440) angeordnet ist.

9. Sattelsitzfahrzeug nach einem der Ansprüche 1 bis 8, das weiterhin aufweist:
eine untere Verkleidung (33), die die Fahrzeugkarosserie von unten verkleidet, wobei die untere Verkleidung (33) einen Ausschnittsbereich (33a) hat, der einen Kabelbaum (140c) des Abgassensors (140) an der vorgelagerten Seite umgeht.

10. Sattelsitzfahrzeug nach einem der Ansprüche 1 bis 9, wobei
der Abgassensor (140, 340) in dem nach unten verlaufenden Fortsetzungsbereich (125) angeordnet ist.

11. Sattelsitzfahrzeug nach einem der Ansprüche 1 bis 9, wobei der Abgassensor (240) im gebogenen Bereich (127) angeordnet ist.

12. Sattelsitzfahrzeug nach Anspruch 11, wobei
mit Bezugnahme auf eine imaginäre Achse (127b), die durch eine Mitte des gebogenen Bereichs (127) hindurchgeht, der Abgassensor (240) an einer Außenflächenseite einer Biegung im gebogenen Bereich (127) angeordnet ist.

## Revendications

1. Véhicule à selle, comprenant :
un moteur oscillant unitaire (13) qui comporte un carter de moteur (43) et une portion de cylindre (44) ayant un axe de cylindre (44a) s'étendant depuis le carter de moteur (43) dans une direction avant-arrière du véhicule et qui est supporté oscillant sur un châssis de carrosserie de véhicule (12) ;
un tuyau d'échappement (77) raccordé à la portion de cylindre (44) ;
une unité de catalyseur (121) disposée dans le tuyau d'échappement (77) ; un capteur de gaz d'échappement (140, 240, 340, 440) disposé dans le tuyau d'échappement (77), et
un silencieux (124) qui est une portion d'extrémité aval du tuyau d'échappement (77),
dans lequel
le moteur oscillant unitaire (13) est supporté sur le châssis de carrosserie de véhicule (12) via un arbre basculant côté carrosserie de véhicule (48b) disposé supérieurement au moteur oscillant unitaire (13),
en vue latérale, au moins une partie de l'unité de catalyseur (121) est disposée inférieurement à la portion de cylindre (44) et est disposée dans une région entre une première ligne imaginaire (L1) et une deuxième ligne imaginaire (L2), la première ligne imaginaire (L1) reliant l'arbre basculant côté carrosserie de véhicule (48b) et une extrémité avant (43b) du carter de moteur (43), la deuxième ligne imaginaire (L2) reliant une portion de raccordement de tuyau d'échappement (46E) de la portion de cylindre (44), avec laquelle une extrémité du tuyau d'échappement (77) est raccordé, et l'arbre basculant côté carrosserie de véhicule (48b),
le tuyau d'échappement (77) comporte un tuyau d'échappement côté amont (120) situé en amont de l'unité de catalyseur (121),
**caractérisé en ce que**
le tuyau d'échappement côté amont (120) comporte une portion d'extension vers le bas (125) qui s'étend depuis la portion de raccordement de tuyau d'échappement (46E) vers le bas, une portion d'extension latérale (126) qui s'étend depuis une extrémité inférieure de la portion d'extension vers le bas (125) vers un côté opposé par rapport au silencieux (124) dans la direction de largeur de véhicule, et une portion incurvée (127) qui est fléchie depuis une extrémité externe de la portion d'extension latérale (126) vers un côté du silencieux (124) et raccordée à l'unité de catalyseur (121) disposée postérieurement à la portion d'extension vers le bas (125), et
le capteur de gaz d'échappement (140, 240, 340, 440) est disposé dans le tuyau d'échappement côté amont (120) à une position inférieure à la portion de cylindre (44).

2. Véhicule à selle selon la revendication 1, dans lequel
l'unité de catalyseur (121) et le capteur de gaz d'échappement (140, 240, 340, 440) sont disposés à l'intérieur du châssis de carrosserie de véhicule (12) en vue en plan.

3. Véhicule à selle selon la revendication 1 ou 2, dans lequel
l'unité de catalyseur (121) est disposée de manière à avoir une direction longitudinale orientée dans une direction de largeur de véhicule, et
l'unité de catalyseur (121) est disposée décalée sur un premier côté dans la direction de largeur de véhicule vis-à-vis d'une portion centrale (C) dans la direction de largeur de véhicule du véhicule à selle.

4. Véhicule à selle selon l'une quelconque des revendications 1 à 3, dans lequel
le capteur de gaz d'échappement (140, 440) est disposé dans le tuyau d'échappement côté amont (120) à une position antérieure à l'unité de catalyseur (121), et
le capteur de gaz d'échappement (140, 440) est disposé dans le tuyau d'échappement côté amont (120) depuis un côté avant.

5. Véhicule à selle selon l'une quelconque des revendications 1 à 4, dans lequel
le capteur de gaz d'échappement (140, 240, 340, 440) comporte un détecteur (140a) qui détecte un gaz d'échappement et une terminaison (140b) qui fait saillie vers un extérieur du tuyau d'échappement côté amont (120), et
la terminaison (140b) est disposée à une position supérieure au détecteur (140a).

6. Véhicule à selle selon l'une quelconque des revendications 1 à 5, dans lequel
le capteur de gaz d'échappement (140, 240, 340, 440) est disposé de manière à s'étendre le long d'un flux d'échappement.

7. Véhicule à selle selon l'une quelconque des revendications 1 à 6, dans lequel
en vue latérale, le capteur de gaz d'échappement (140, 340, 440) est recouvert depuis un extérieur dans un capot de côté (34) qui recouvre une carrosserie de véhicule depuis un côté.

8. Véhicule à selle selon l'une quelconque des revendications 1 à 7, comprenant en outre :
un réservoir de carburant (38) disposé antérieurement le capteur de gaz d'échappement (140, 240, 340, 440).

9. Véhicule à selle selon l'une quelconque des revendications 1 à 8, comprenant en outre :
un capot de dessous (33) qui recouvre la carrosserie de véhicule depuis le dessous, dans lequel
le capot de dessous (33) présente une portion de découpe (33a) qui évite un faisceau (140c) du capteur de gaz d'échappement côté amont (140).

10. Véhicule à selle selon l'une quelconque des revendications 1 à 9, dans lequel
le capteur de gaz d'échappement (140, 340) est disposé dans la portion d'extension vers le bas (125).

11. Véhicule à selle selon l'une quelconque des revendications 1 à 9, dans lequel
le capteur de gaz d'échappement (240) est disposé dans la portion incurvée (127).

12. Véhicule à selle selon la revendication 11, dans lequel
en référence à un axe imaginaire (127b) qui passe par un centre de la portion incurvée (127), le capteur de gaz d'échappement (240) est disposé sur un côté surface externe d'une courbe dans la portion incurvée (127).
